(19) Europäisches Patentamt / European Patent Office / Office européen des brevets

(11) **EP 3 361 312 A1**

(12) **EUROPEAN PATENT APPLICATION**
published in accordance with Art. 153(4) EPC

(43) Date of publication:
**15.08.2018 Bulletin 2018/33**

(51) Int Cl.:
*G03B 21/60* (2014.01)     *G02B 26/10* (2006.01)
*G02B 27/48* (2006.01)     *G03B 21/00* (2006.01)
*G03B 21/62* (2014.01)

(21) Application number: **16853737.1**

(22) Date of filing: **07.10.2016**

(86) International application number:
**PCT/JP2016/079901**

(87) International publication number:
**WO 2017/061586 (13.04.2017 Gazette 2017/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **08.10.2015 JP 2015200056**

(71) Applicant: **Dai Nippon Printing Co., Ltd.
Tokyo, 162-8001 (JP)**

(72) Inventors:
• **KUBOTA, Shogo
Tokyo 162-8001 (JP)**
• **KURASHIGE, Makio
Tokyo 162-8001 (JP)**
• **NAKATSUGAWA, Kaori
Tokyo 162-8001 (JP)**

(74) Representative: **Müller-Boré & Partner
Patentanwälte PartG mbB
Friedenheimer Brücke 21
80639 München (DE)**

(54) **PARTICLES, OPTICAL SHEET, SCREEN, DISPLAY DEVICE, PARTICLE INSPECTION DEVICE, PARTICLE MANUFACTURING DEVICE, PARTICLE INSPECTION METHOD, PARTICLE MANUFACTURING METHOD, SCREEN INSPECTION METHOD, AND SCREEN MANUFACTURING METHOD**

(57)     [Problem]
To provide particles, an optical sheet, a screen, a display device, a particle inspection device, a particle manufacturing device, a particle inspection method, a particle manufacturing method, a screen inspection method, and a screen manufacturing method that are capable of reducing speckles and effectively avoiding deterioration in image quality due to a color change.

[Solution]
The particles include a first moiety 61 and a second moiety 62 that have different dielectric constants. A reflectance or a reflectance spectrum at a wavelength of invisible light, or a transmittance or a transmittance spectrum at a wavelength of invisible light is different between the first moiety 61 and the second moiety 62.

FIG.5

## Description

Technical Field

The present invention relates to particles, an optical sheet, a screen, a display device, a particle inspection device, a particle manufacturing device, a particle inspection method, a particle manufacturing method, a screen inspection method, and a screen manufacturing method.

Background Art

For example, as disclosed in Patent Document 1 and Patent Document 2, a projector using a coherent light source has widely been used. Typically, laser light oscillated by a laser light source is used as coherent light. When image light from a projector is formed by coherent light, a speckle is observed on a screen irradiated with the image light. The speckle is recognized as a spot pattern, and deteriorates display image quality. In Patent Document 1, an incidence angle of the image light incident on each position on the screen is temporally changed for the purpose of reducing speckles. As a result, scattering patterns having no correlation are generated on the screen and superposed on each other on an observation surface, and speckles can be reduced.

Prior Art Documents

Patent Documents

Patent Document 1: International Publication No. 2012-033174

Patent Document 2: JP 2008-310260 A

Summary of the Invention

Problems to be Solved by the Invention

As another method for reducing speckles, a screen having a diffusion characteristic that temporally changes is considered to be effective. Patent Document 2 proposes a screen configured with electronic paper. In a screen of Patent Document 2, a reflectance changes in accordance with an emitting position of image light emitted in a raster scanning system.

By controlling a reflectance of a portion not irradiated with the image light to be low, reflection of ambient light, such as light from outside and illumination light, is restrained in the area where reflectance is low, and there is possibility that a high-contrast image can be displayed.

However, in the screen disclosed in Patent Document 2, a reflectance only changes depending on the display proportion of a white particle and a black particle, which does not have any effect on a speckle generated on the screen. In order to effectively reduce speckles generated on the screen, temporally changing a diffusion wave surface is effective while a diffusion characteristic of the screen is maintained. There have heretofore been proposed systems, such as that directly oscillates a screen; however, such systems have not yet been widespread due to restraint on a practical aspect.

The present invention is made in consideration of the above points. The object of the present invention is to provide particles, an optical sheet, a screen, a display device, a particle inspection device, a particle manufacturing device, a particle inspection method, a particle manufacturing method, a screen inspection method, and a screen manufacturing method that can reduce speckles by a method different from a conventional method, and can effectively avoid deterioration in image quality that accompanies a color change.

Means for Solving the Problems

According to an aspect of the present invention for achieving the above object, there is provided a particle including a first moiety and a second moiety having different dielectric constants. A reflectance or a reflectance spectrum at a wavelength of invisible light, or a transmittance or a transmittance spectrum at a wavelength of invisible light is different between the first moiety and the second moiety.

According to an aspect of the present invention, there is provided a particle in which the predetermined wavelength is in an ultraviolet band or an infrared band.

According to an aspect of the present invention, there is provided a particle in which at least one of the first moiety and the second moiety is excited by ultraviolet radiation, and emits fluorescence of ultraviolet rays, visible light, or infrared rays.

According to an aspect of the present invention, there is provided a particle in which at least one of the first moiety and the second moiety is excited by visible light radiation or infrared radiation and emits fluorescence of infrared rays.

According to an aspect of the present invention, there is provided a particle in which at least one of the first moiety and the second moiety is excited by ultraviolet radiation and emits phosphorescence of ultraviolet rays, visible light, or infrared rays.

According to an aspect of the present invention, there is provided a particle in which at least one of the first moiety and the second moiety is excited by visible light radiation or infrared radiation and emits phosphorescence of infrared rays.

According to an aspect of the present invention, there is provided a particle, in which the first moiety and the second moiety each have a single color or are transparent in a visible light region.

According to an aspect of the present invention, there is provided an optical sheet including a particle layer that includes a holding section having a predetermined thickness, and the particle housed in a cavity formed on the holding section.

According to an aspect of the present invention, there is provided an optical sheet that includes base materials that sandwich the particle layer.

According to an aspect of the present invention, there is provided a screen that includes the optical sheet and an electrode that forms an electric field for driving the particle of the particle layer when a voltage is applied.

According to an aspect of the present invention, there is provided a screen that includes an optical layer that absorbs or reflects an ultraviolet band.

According to an aspect of the present invention, there is provided a display device that includes the screen and a projector that emits coherent light to the screen.

According to an aspect of the present invention, there is provided a display device that further includes a power source that applies a voltage to the electrode of the screen, and a control device that controls an applied voltage from the power source to the electrode. The control device controls an applied voltage from the power source to move the particle in the particle layer.

According to an aspect of the present invention, there is provided a display device, in which the control device controls a voltage applied from the power source so as to repeatedly rotate the particle within an angular range smaller than 180°.

According to an aspect of the present invention, there is provided a display device, in which the control device controls at least one of a direction and a position of the particle by an applied voltage from the power source so that the first moiety covers at least part of the second moiety from an observer side along a normal line direction of the screen.

According to an aspect of the present invention, there is provided a particle inspection device that includes a microscope for observing the particle, a light source that illuminates the particle, an imaging section that captures an image observed with the microscope, and a control section that compares an image of the particle captured by the imaging section with pass criteria determined in advance.

According to an aspect of the present invention, there is provided a particle manufacturing device that includes a first storage section that stores a first material that forms the first moiety of the particle, a second storage section that stores a second material that forms the second moiety of the particle, a carrier storage section that stores a liquid or gas carrier, a flow path connected to the first storage section, the second storage section, and the carrier storage section, and through which the first material, the second material, the particle formed by the first material and the second material, and the carrier flow, a hardening section that hardens the particle, a branch section that branches the flow path, a discharge section connected to a first branch branched by the branch section, a discard section connected to a second branch branched by the branch section, and the particle inspection device. The control section controls the hardening section to harden the particle and then the branch section so that the particle is discharged from the discharge section when an image of the particle captured by the imaging section satisfies pass criteria determined in advance. The control section controls the branch section so that the particle is discarded from the discard section when an image of the particle captured by the imaging section does not satisfy pass criteria determined in advance.

According to an aspect of the present invention, there is provided a particle manufacturing device, in which the control section controls at least one of a flow rate of the first material that flows out from the first storage section and a flow rate of the second material that flows out from the second storage section when an image of the particle captured by the imaging section does not satisfy pass criteria determined in advance.

According to an aspect of the present invention, there is provided a particle inspection method that includes the steps of illuminating the particle, capturing an image of the particle, and comparing the captured image of the particle with pass criteria determined in advance.

According to an aspect of the present invention, there is provided a particle manufacturing method that includes the steps of allowing a predetermined amount of a first material that forms the first moiety and a second material that forms the second moiety to flow through a flow path, allowing a predetermined amount of a carrier to flow through the flow path and cutting out a two-phase flow formed by the first material and a predetermined amount of the second material at a predetermined length, executing the particle inspection method, hardening and then discharging the particle when the particle satisfies pass criteria determined in advance, and discarding the particle without hardening when the particle does not satisfy pass criteria determined in advance.

According to an aspect of the present invention, there is provided a particle manufacturing method, in which, when the particle does not satisfy pass criteria determined in advance, at least one of a flow rate of the first material and a flow rate of the second material is controlled.

According to an aspect of the present invention, there is provided a screen manufacturing method that includes the steps of forming ink obtained by dispersing a particle formed by the particle manufacturing method into a sheet, manufacturing a particle layer in which a cavity is formed around the particle by immersing the sheet into liquid, manufacturing an optical sheet by sandwiching the particle layer between base materials, and manufacturing a screen by providing an electrode that forms an electric field in the optical sheet.

According to an aspect of the present invention, there is provided a screen inspection method that includes the steps of reversing the particle by regularly reversing the direction of an electric field with respect to a screen manufactured by the screen manufacturing method, illuminating the screen, measuring a reflectance or a transmittance of the screen with an optical device, and comparing the measured reflectance or transmittance of the screen with pass criteria determined in advance.

According to an aspect of the present invention, there is provided a particle including a first moiety and a second moiety having different dielectric constants. At least one of the first moiety and the second moiety is excited by ultraviolet radiation, and emits fluorescence of ultraviolet rays, visible light, or infrared rays.

According to an aspect of the present invention, there is provided a particle including a first moiety and a second moiety having different dielectric constants. At least one of the first moiety and the second moiety is excited by visible light radiation or infrared radiation and emits fluorescence of infrared rays.

According to an aspect of the present invention, there is provided a particle including a first moiety and a second moiety having different dielectric constants. At least one of the first moiety and the second moiety is excited by ultraviolet radiation and emits phosphorescence of ultraviolet rays, visible light, or infrared rays.

According to an aspect of the present invention, there is provided a particle including a first moiety and a second moiety having different dielectric constants. At least one of the first moiety and the second moiety is excited by visible light radiation or infrared radiation and emits phosphorescence of infrared rays.

Advantage of the Invention

With particles, an optical sheet, a screen, a display device, a particle inspection device, a particle manufacturing device, a particle inspection method, a particle manufacturing method, a screen inspection method, and a screen manufacturing method according to an embodiment of the present invention, speckles generated on a screen can be reduced, and deterioration in image quality that accompanies a color change can be effectively avoided.

Brief Description of the Drawings

FIG. 1 shows a reflection type display device of the present embodiment;
FIG. 2 shows a transmission type display device of the present embodiment;
FIG. 3 shows a method of emitting light to a screen of the present embodiment;
FIG. 4 shows part of a cross section of the screen of the present embodiment;
FIG. 5 shows a particle on a particle layer of the screen of the present embodiment;

FIG. 6 shows an example of a particle manufacturing device of the present embodiment;
FIG. 7 shows a flowchart of a particle manufacturing method;
FIG. 8 shows a flowchart of a particle inspection method;
FIG. 9 shows a flowchart of a screen manufacturing method;
FIG. 10 shows a flowchart of a screen inspection method;
FIG. 11 shows an example of a voltage applied to the screen;
FIG. 12 shows part of a cross section of the screen of another embodiment;
FIG. 13 shows a particle in an example where colors of a first moiety and a second moiety are different;
FIG. 14 shows a particle in an example where volume ratios of the first moiety and the second moiety are different;
FIG. 15 shows an example of a particle having a light absorption function;
FIG. 16 shows an example of a screen having a plurality of wire electrode sections;
FIG. 17 shows part of a cross section of a transmission type screen of the present embodiment;
FIG. 18 shows an example of a display device using the transmission type screen of the present embodiment;
FIG. 19 shows another example of a Fresnel lens;
FIG. 20 shows a second example of a viewing angle enlarging section;
FIG. 21 shows a third example of the viewing angle enlarging section;
FIG. 22 shows another example of a diffusion section; and
FIGS. 23A and 23B show a relationship between particles and cavities.

Mode for Carrying Out the Invention

Hereinafter, description will be given of an optical sheet, a screen, and a display device according to the present invention with reference to the accompanying drawings.

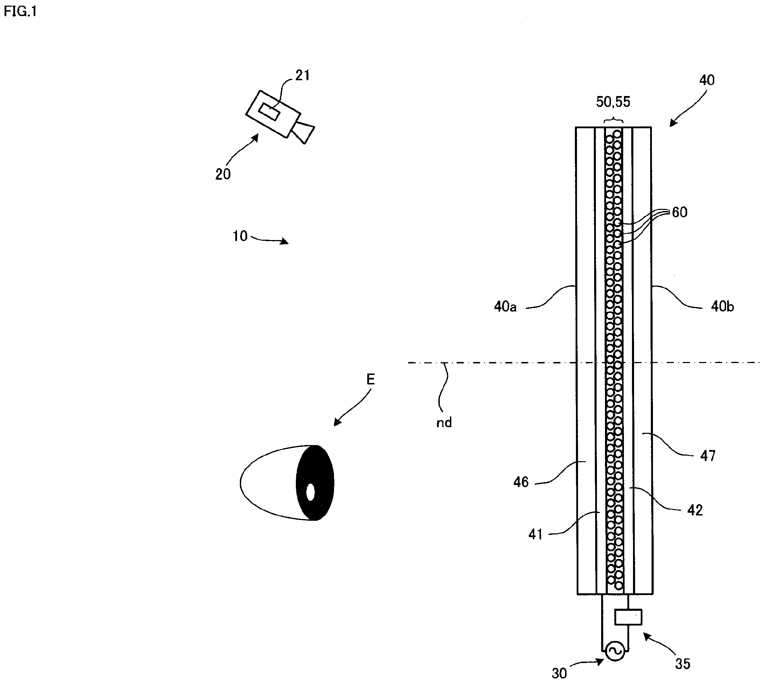

FIG. 1 shows a reflection type display device 10 of the present embodiment.

The display device 10 of the present embodiment includes a projector 20 and a screen 40 to which image light is emitted from the projector 20. As will be described later, the screen 40 can temporally change a diffusion characteristic with respect to incident light. In this manner, speckles can be made less conspicuous. In relation to such a function of the screen 40, the display device 10 includes a power source 30 and a control device 35. The power source 30 applies a voltage to the screen 40. The control device 35 adjusts an applied voltage from the power source 30 to control a state of the screen 40. The control device 35 also controls operation of the projector 20. As an example, the control device 35 may be a general-purpose computer.

The projector 20 projects light that forms an image, that is, image light, to the screen 40. In an illustrated example, the projector 20 includes a coherent light source 21 that oscillates coherent light and a scanning device (not shown) that controls an optical path of the coherent light source 21. As an example, the coherent light source 21 is configured with a laser light source that oscillates laser light. The coherent light source 21 may include a plurality of coherent light sources that generate light in wavelength regions different from each other. For the reflection type screen 40, an observer E can observe an image reflected on the screen 40 from a first surface 40a side.

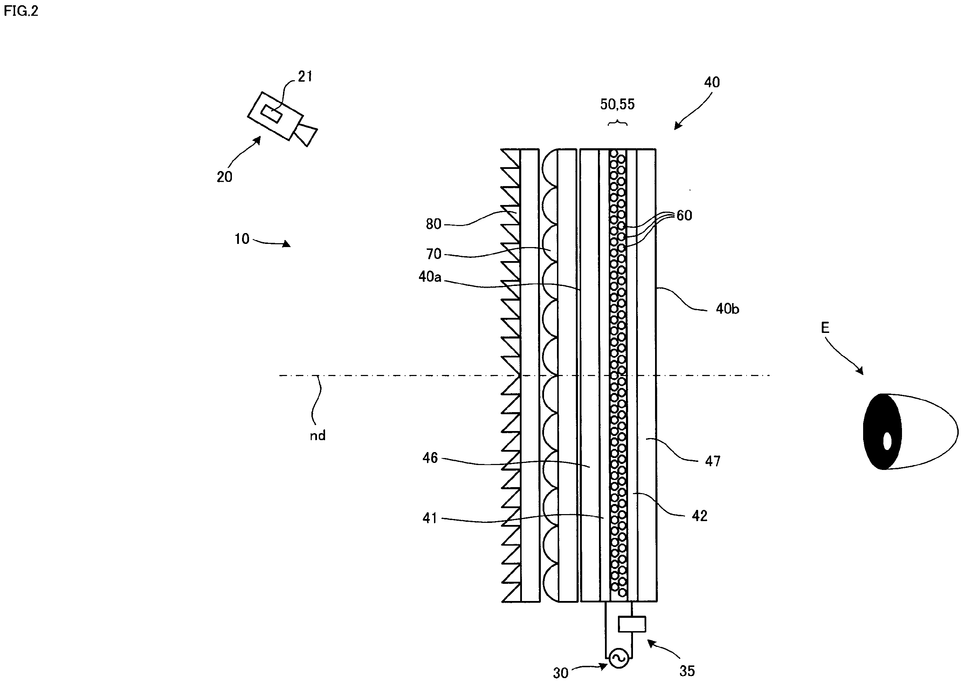

FIG. 2 shows the transmission type display device 10 of the present embodiment.

The transmission type display device 10 of the present embodiment includes the projector 20, the screen 40 to which image light is emitted from the projector 20, a lenticular lens 70 arranged on the projector 20 side on the screen 40, and a Fresnel lens 80 arranged on the projector 20 side on the lenticular lens 70. The lenticular lens 70 may be arranged on a second surface 40b side of the screen 40. A microlens array may be used in place of the lenticular lens 70. The lenticular lens 70, the Fresnel lens 80, the microlens array, and the like constitute a diffusion member.

As will be described later, the screen 40 can temporally change a diffusion characteristic with respect to incident light. In this manner, speckles can be made less conspicuous. In relation to such a function of the screen 40, the display device 10 includes the power source 30 and the control device 35. The power source 30 applies a voltage to the screen 40. The control device 35 controls an applied voltage from the power source 30 to control a state of the screen 40. The control device 35 may control operation of the projector 20. As an example, the control device 35 can be a general-purpose computer.

The projector 20 projects light that forms an image, that is, image light, to the screen 40. In an illustrated example, the projector 20 includes the coherent light source 21 that oscillates coherent light and a scanning device (not shown) that controls an optical path of the coherent light source 21. As an example, the coherent light source 21 is configured with a laser light source that oscillates laser light. The coherent light source 21 may include a plurality of coherent light sources that generate light in wavelength regions different from each other. For the transmission type screen 40, the observer E can observe an image that passes through the screen 40 from the second surface 40b side on an opposite side of the first surface 40a where the coherent light source 21 is provided. The projector 20 may be provided internally with a control device (not shown) which is separate from the control device 35, and controlled by the internal control section.

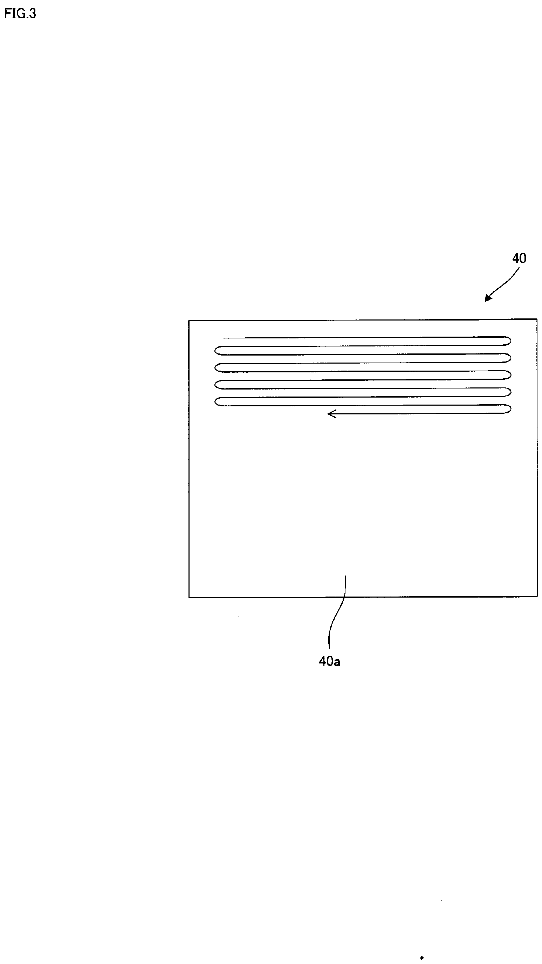

FIG. 3 shows a method of emitting light to the screen 40 of the present embodiment.

In an illustrated example, the projector 20 projects coherent light on the screen 40 in a raster scanning system. As shown in FIG. 3, the projector 20 projects the coherent light in a manner of scanning an entire area on the screen 40. The scanning is performed at a high speed. The projector 20 stops emission of the coherent light from the coherent light source 21 in accordance with an image to be formed. That is, the coherent light is projected only onto a position on the screen 40 at which an image is to be formed. As a result, an image is formed on the screen 40. Operation of the projector 20 is controlled by the control device 35.

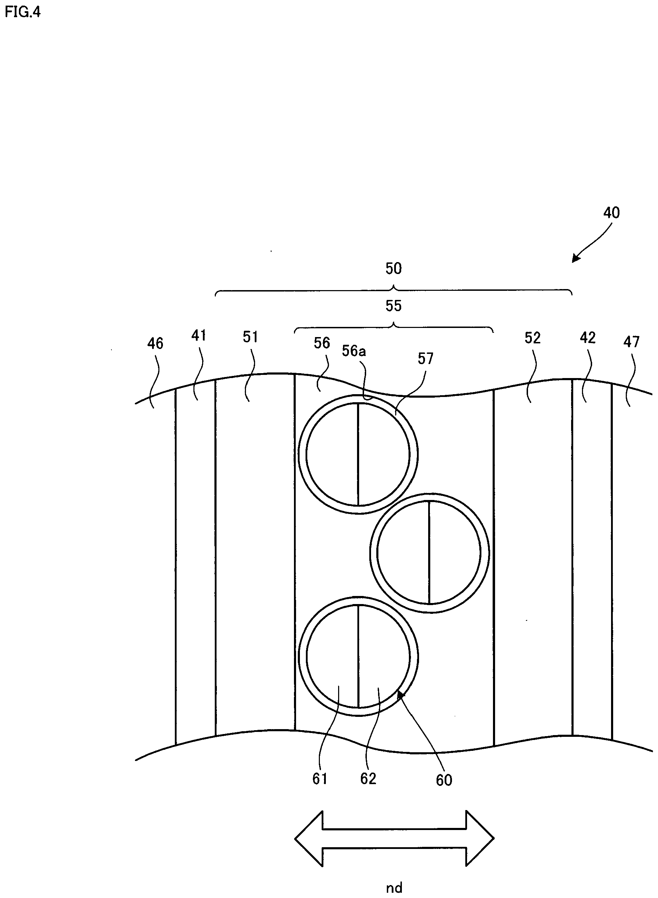

FIG. 4 shows part of a cross section of the screen 40 of the present embodiment.

First, description will be given of the screen 40. In an example shown in FIG. 4, the screen 40 includes an optical sheet 50 having a plurality of particles, and electrodes 41 and 42 connected to the power source 30. A first electrode 41 spreads in a sheet form on a first main surface of the optical sheet 50, and a second electrode 42 spreads in a sheet form on a second main surface of the optical sheet 50. The screen 40 shown in FIG. 4 includes a first cover layer 46 that covers the first electrode 41 and forms a first top surface of the screen 40, and a second cover layer 47 that covers the second electrode 42 and forms a second top surface of the screen 40.

The first electrode 41 and the first cover layer 46 through which the image light passes are transparent. Transmittances in a visible light region of the first electrode 41 and the first cover layer 46 are preferably 80% or higher, or more preferably 84% or higher. A visible light transmittance is specified as an average value of transmittances of wavelengths when measurement is performed within a range of measurement wavelengths from 380 nm to 780 nm by using a spectrophotometer ("UV-3100PC" manufactured by Shimadzu Corporation, conforming to JISK0115).

As a conductive material constituting the first electrode 41, indium tin oxide (ITO), indium zinc oxide (InZno), a Ag nanowire, a carbon nanotube, and the like can be used. On the other hand, the first cover layer 46 is a layer for protecting the first electrode 41 and the optical sheet 50. The first cover layer 46 can be formed of transparent resin, for example, polyethylene terephthalate having excellent stability, or polycarbonate, acrylic resin, methacrylic resin, cycloolefin polymer, and the like.

The second electrode 42 can be configured similarly as the first electrode 41. However, the second electrode 42 does not need to be transparent for the reflection type screen 40. Accordingly, the second electrode 42 of the reflection type screen 40 may be formed, for example, by a metal thin film of aluminum, copper, and the like. The second electrode 42 made of a metal film can function as a reflection layer that reflects image light in the reflection type screen 40. The second cover layer 47 can be configured similarly as the first cover layer 46.

The optical sheet 50 includes a pair of base materials 51 and 52 and a particle layer 55 provided between the pair of base materials 51 and 52. The first base material 51 supports the first electrode 41, and the second base material 52 supports the second electrode 42. The particle layer 55 is sealed between the first base material 51 and the second base material 52.

The first base material 51 and the second base material 52 can seal the particle layer 55, and are configured with a material having a strength that allows the first base material 51 and the second base material 52 to function as support bodies of the first electrode 41, the second electrode 42, and the particle layer 55, for example, a polyethylene terephthalate resin film and the like. In the example shown in FIG. 4, image light passes through the first base material 51 of the screen 40. Accordingly, the first base material 51 is transparent, and preferably has a visible light transmittance similar to that of the first electrode 41 and the first cover layer 46. For the transmission type screen 40, the second base material 52, the second electrode 42, and the second cover layer 47 are preferably also transparent.

The particle layer 55 includes a large number of particles 60, and a holding section 56 that holds the particles 60. The holding section 56 holds the particles 60 in a movable manner. As shown in FIG. 4, the holding section 56 has a large number of cavities 56a, and the particles 60 are housed in the cavities 56a. An inner dimension of each of the cavities 56a is larger than an outer dimension of the particle 60 in the cavity 56a. Accordingly, the particles 60 are movable in the cavities 56a. The holding section 56 is swollen with liquid 57. In the cavity 56a, the space between the holding section 56 and the particle 60 is filled with the liquid 57. With the holding section 56 swollen with the liquid 57, a smooth movement of the particle 60 can be secured in a stable manner.

The liquid 57 is used for a smooth movement of the particles 60. The liquid 57 is held in the cavity 56a by swelling of the holding section 56. The liquid 57 is preferably low in polarity so as not to interfere with the particle 60 moving in accordance with an electric field. As the low-polarity liquid 57, there can be used a variety of materials that make a movement of the particle 60 smooth. As an example, dimethylsilicone oil, isoparaffin-based liquid, linear alkane, and the like can be used as the liquid 57.

As an example, an elastomer sheet made of an elastomer material, and the like can be used as the holding section 56. The holding section 56 as an elastomer sheet can be swollen with the liquid 57. As an example, silicone resin, (slightly crosslinked) acrylic resin, (slightly crosslinked) styrene resin, polyolefin resin, and the like can be used as a material of the elastomer sheet.

The cavities 56a are distributed in high density in a surface direction of the screen 40 in the holding section 56. The cavity 56a is filled with non-polar liquid.

The particles 60 have a function of changing a traveling direction of image light projected from the projector 20 shown in FIG. 1 or 2, for example, a function of diffusing, reflecting, or refracting the image light. The particles 60 include a first moiety 61 and a second moiety 62 having different dielectric constants. That is, when the particle 60 is placed in an electric field, an electric dipole moment is generated in the particle 60. At this time, the particle 60 moves toward a position at which a vector of the dipole moment faces an exact opposite of a vector of the electric field.

Accordingly, when a voltage is applied between the first electrode 41 and the second electrode 42, and an electric field is generated on the optical sheet 50 positioned between the first electrode 41 and the second electrode 42, the particle 60 moves in the cavity 56a so as to have a stable attitude with respect to the electric field, that is, to be at a position and in a direction which are stable with respect to the electric field. The screen 40 changes a diffusion wave surface of the particle 60 along with a movement of the particle 60 having an optical diffusion function.

For example, the control device 35 can repeatedly rotate the particle 60 within an angular range smaller than 180° by controlling an applied voltage from the power supply 30. Accordingly, at least one of the first moiety 61 and the second moiety 62 can be selected and positioned on an observer side.

The control device 35 can also control at least one of a direction and a position of the particle 60 by an applied voltage from the power supply 30 so that the first moiety 61 of the particle 60 covers at least part of the second moiety 62 from the observer side along a normal line direction of the screen 40. Accordingly, even when the first moiety 61 and the second moiety 62 do not have strictly the same color, a change in the color tone of the screen 40 can be effectively made hardly sensible while an image is displayed by moving the particle 60.

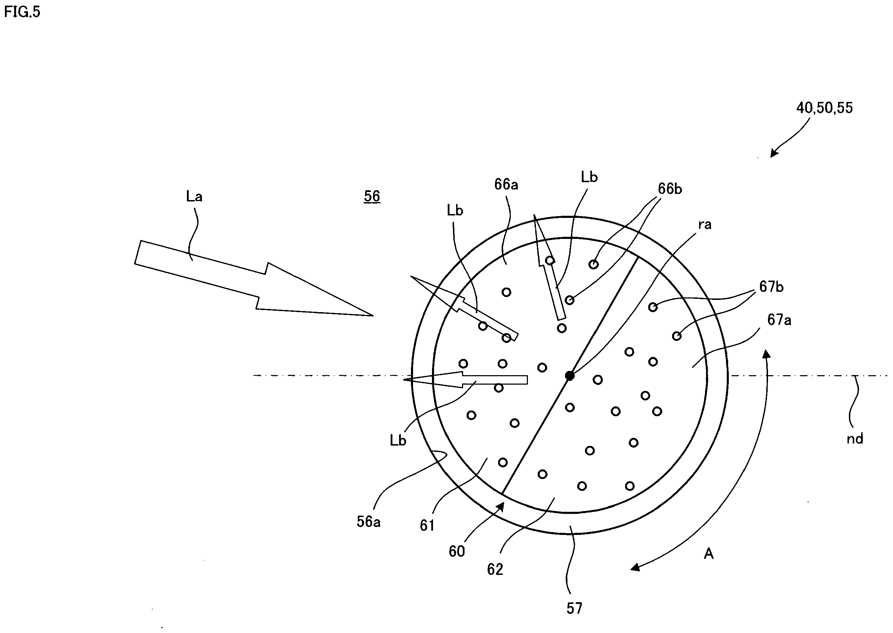

FIG. 5 shows the particle 60 of the particle layer 55 of the screen 40 of the present embodiment.

When two types of polymerizable resin components constituting a continuous phase include a diffuse component, an internal diffusion function can be provided to the first moiety 61 and the second moiety 62 of the particle 60. As shown in FIG. 5, the first moiety 61 of the particle 60 includes a first main section 66a and a first diffuse component 66b that is dispersed in the first main section 66a. Similarly, the second moiety 62 of the particle 60 includes a second main section 67a and a second diffuse component 67b that is dispersed in the second main section 67a.

That is, the spherical particle 60 shown in FIG. 5 can express a diffusion function with respect to light that travels through the inside of the first moiety 61 and light that travels through the inside of the second moiety 62. The first diffuse component 66b and the second diffuse component 67b are components that may have a function of changing a traveling direction of the light passing through the particle 60 by reflection, refraction, and the like. Such a light diffusion function of the first diffuse component 66b and the second diffuse component 67b is provided by, for example, constituting the first diffuse component 66b and the second diffuse component 67b from a material having a refractive index different from that of a material constituting the first main section 66a and the second main section 67a of the particle 60, or constituting the first diffuse component 66b and the second diffuse component 67b from a material that may have a reflection function with respect to light.

As the first diffuse component 66b and the second diffuse component 67b having a refractive index different from that of a material constituting the first main section 66a and the second main section 67a, there are a resin bead, a glass bead, a metal compound, a porous substance containing gas, and the like. The first diffuse component 66b and the second diffuse component 67b may be a mere air bubble.

The particle 60 preferably has a single color. That is, the first moiety 61 and the second moiety 62 preferably have the same color. The color of the first moiety 61 and the second moiety 62 can be adjusted by adding a coloring material, such as a pigment and a dye. A diameter of the particle 60 is 10 to 1000 $\mu$m.

The single color used for the particle 60 refers to a color that is uniform to an extent that an observer observing the first surface 40a of the reflection type screen 40 shown in FIG. 1 or the second surface 40b of the transmission type screen 40 shown in FIG. 2 cannot recognize a color change of the screen 40 with a general level of observation skills, even when the particle 60 moves in the optical sheet 50 in a state where no image is displayed on the screen 40. That is, for the reflection type, when, in a state where no image is displayed, an observer observes with a normal attention the first surface 40a of the screen 40 in a state where the first moiety 61 of the particle 60 faces the first surface 40a of the screen 40 and the first surface 40a of the screen 40 in a state where the second moiety 62 of the particle 60 faces the first surface 40a of the screen 40, and colors are recognized as the same, the particle 60 is considered to have a single color.

Specifically, for the reflection type, a color difference $\Delta E^*ab$ (= $[(\Delta L^*)^2 + (\Delta a^*)^2 + (\Delta b^*)^2]^{1/2}$) between the first surface 40a of the screen 40 in a state where the first moiety 61 of the particle 60 faces the first surface 40a of the screen 40 and the first surface 40a of the screen 40 in a state where the second moiety 62 of the particle 60 faces the first surface 40a of the screen 40 is preferably 1.5 or lower. The color difference $\Delta E^*ab$ is a value specified based on a brightness $\Delta L^*$ and chromaticities a* and b* in an L*a*b* color specification system measured by using a colorimeter (CM-700d) manufactured by Konica Minolta, Inc. conforming to JIS Z8730. When the screen 40 is a reflection type, evaluation is made based on a value of the color difference $\Delta E^*ab$ specified based on the brightness $\Delta L^*$ and the chromaticities a* and b* of reflected light. When the screen 40 is a transmission type, evaluation is made based on a value of the color difference $\Delta E^*ab$ specified based on the brightness $\Delta L^*$ and the chromaticities a* and b* of transmission light.

Even when color coordinates of the first moiety 61 and the second moiety are the same in a 2° visual field or a 10° visual field in a light source C and a light source D, colors should be the same under the visible light of wavelengths from 380 nm to 780 nm.

As described above, with the particle 60 having a single color, the screen 40 when no image or the like is displayed can have a constant color. When an image is displayed on the screen 40, a color tone change is sensed less. As a result, deterioration in image quality due to a color change in the screen 40 can be effectively avoided.

However, when the screen 40 has a constant color and the particle 60 has a single color, whether or not the particle 60 moves normally is difficult to determine. In view of the above, in the present embodiment, the first moiety 61 and the second moiety 62 of the particle 60 are formed of materials that reacts differently to light having a predetermined wavelength.

Hereinafter, a variety of modes of the particle 60 will be shown.

In the particle 60 of the first embodiment, a reflectance or a reflectance spectrum or a transmittance or a transmittance spectrum of the first moiety 61 and the second moiety 62 at a predetermined wavelength in an ultraviolet band of wavelengths of 280 nm to 400 nm is different. In the first embodiment, at least one of the first moiety 61 and the second moiety 62 of the particle 60 preferably contains an ultra violet absorber (UVA). For example, copolymer and the like with resin having a benzotriazole-based UVA, a triazine-based UVA, a benzophenone-based UVA, and a benzotriazole-based segment may be compatibilized or dispersed in a resin as a main material of the particle 60.

As described above, by differentiating the reflectance or the reflectance spectrum or the transmittance or the transmittance spectrum of the first moiety 61 and the second moiety 62 at a predetermined wavelength in an ultraviolet band, a difference between the first moiety 61 and the second moiety 62 when an ultraviolet ray is made incident can be detected, and a normal movement of the particle 60 can be grasped.

In the particle 60 of the second embodiment, the reflectance or the reflectance spectrum or the transmittance or the transmittance spectrum of the first moiety 61 and the second moiety 62 in an infrared band of wavelengths of 700 nm to 1000 nm is different. In the second embodiment, a temperature rise prevention agent is preferably contained as at least one material of the particle 60. The temperature rise prevention agent absorbs and reflects an infrared ray and suppresses a rise of an internal temperature. For example, a "temperature rise prevention agent" manufactured by Tokyo Printing Ink Mfg. Co., Ltd. and the like may be compatibilized or dispersed in a resin as a main material of the particle 60.

As described above, by differentiating the reflectance or the reflectance spectrum, or the transmittance or the transmittance spectrum of the first moiety 61 and the second moiety 62 at a predetermined wavelength in an infrared band, a difference between the first moiety 61 and the second moiety 62 when an infrared ray is made incident can detected, and a normal movement of the particle 60 can be grasped.

In the particle 60 of a third embodiment, at least one of the first moiety 61 and the second moiety 62 is excited in an ultraviolet band, and emits fluorescence of ultraviolet rays, visible light, or infrared rays. In the third embodiment, at least one of the first moiety 61 and the second moiety 62 of the particle 60 preferably contains a known fluorogenic reagent, fluorescent material, a quantum dot, or the like. For example, a fluorescent dye, such as aminomethylcoumarin acetic acid (AMCA), Alexa Fluor (registered trademark) 350 manufactured by Thermo Fisher Scientific Inc., 4', 6-diamidino-2-phenylindole (DAPI), or the like, or a quantum dot (QD) or the like may be compatibilized or dispersed in a resin as a main material of the particle 60.

As described above, at least one of the first moiety 61 and the second moiety 62 is excited in an ultraviolet band and emits fluorescence of ultraviolet rays, visible light, or infrared rays. Accordingly, a difference between the first moiety 61 and the second moiety 62 when an ultraviolet ray is made incident can be detected, and a normal movement of the particle 60 can be grasped.

In the particle 60 of a fourth embodiment, at least one of the first moiety 61 and the second moiety 62 is excited in a visible light band, and emits fluorescence of infrared rays. In the fourth embodiment, at least one of the first moiety 61 and the second moiety 62 of the particle 60 preferably contains a known fluorescent reagent, fluorescent substance, a quantum dot, or the like.

As described above, at least one of the first moiety 61 and the second moiety 62 is excited in a visible light band and emits fluorescence of infrared rays. Accordingly, a difference between the first moiety 61 and the second moiety 62 when visible light is made incident can be detected, and a normal movement of the particle 60 can be grasped.

In the particle 60 of a fifth embodiment, at least one of the first moiety 61 and the second moiety 62 is excited in an infrared band and emits fluorescence of infrared rays. In the fifth embodiment, at least one of the first moiety 61 and the second moiety 62 of the particle 60 preferably contains a known inorganic fluorescent substance, organic fluorescent substance, or the like. For example, a quantum dot, such as PbS, PbSe, $Ag_2S$, or the like, yttrium aluminum garnet in which a rare earth element is doped, an inorganic fluorescent substance in which lanthanum phosphate rare earth is doped, an inorganic fluorescent substance in which rare earth as disclosed in International Publication No. 2009/116326 is doped, an organic fluorescent compound obtained by chemically modifying a rhodamine skeleton as disclosed in Japanese Patent No. 5,326,124, and the like may be compatibilized or dispersed in a resin as a main material of the particle 60.

As described above, at least one of the first moiety 61 and the second moiety 62 is excited in an infrared band and emits fluorescence of infrared rays. Accordingly, a difference between the first moiety 61 and the second moiety 62 when an infrared ray is made incident can be detected, and a normal movement of the particle 60 can be grasped.

In the particle 60 of a six embodiment, at least one of the first moiety 61 and the second moiety 62 is excited in an ultraviolet band, and emits phosphorescence of ultraviolet rays, visible light, or infrared rays. In the sixth embodiment, at least one of the first moiety 61 and the second moiety 62 of the particle 60 preferably contains a known fluorescent substance or the like. For example, a fluorescent substance as disclosed in [0043] or [0044] of JP 2006-003924 A may be compatibilized or dispersed in a resin as a main material of the particle 60.

As described above, at least one of the first moiety 61 and the second moiety 62 is excited in an ultraviolet band, and emits phosphorescence of ultraviolet rays, visible light, or infrared rays. Accordingly, a difference between the first moiety 61 and the second moiety 62 when an ultraviolet ray is made incident can be detected, and a normal movement of the particle 60 can be grasped.

In the particle 60 of a seventh embodiment, at least one of the first moiety 61 and the second moiety 62 is excited in a visible light or infrared band, and emits phosphorescence of infrared rays. In the seventh embodiment, at least one of the first moiety 61 and the second moiety 62 of the particle 60 preferably contains a known fluorescent substance or the like. For example, an iridium complex compound or the like as disclosed in Japanese Patent Nos. 5,353,509 or 5,392,746 may be compatibilized or dispersed in a resin as a main material of the particle 60.

As described above, at least one of the first moiety 61 and the second moiety 62 is excited in a visible light or infrared band, and emits phosphorescence of infrared rays. Accordingly, a difference between the first moiety 61 and the second moiety 62 when visible light or an infrared ray is made incident can be detected, and a normal movement of the particle 60 can be grasped.

When at least one of the first moiety 61 and the second moiety 62 of the particle 60 is excited by ultraviolet radiation, the screen 40 is preferably provided with a layer that cuts off the ultraviolet rays by reflection or absorption. By providing the layer that cuts off ultraviolet rays, fluorescence or phosphorescence can be restrained from being seen.

The particle layer 55, the optical sheet 50, and the screen 40 are manufactured as described below as an example.

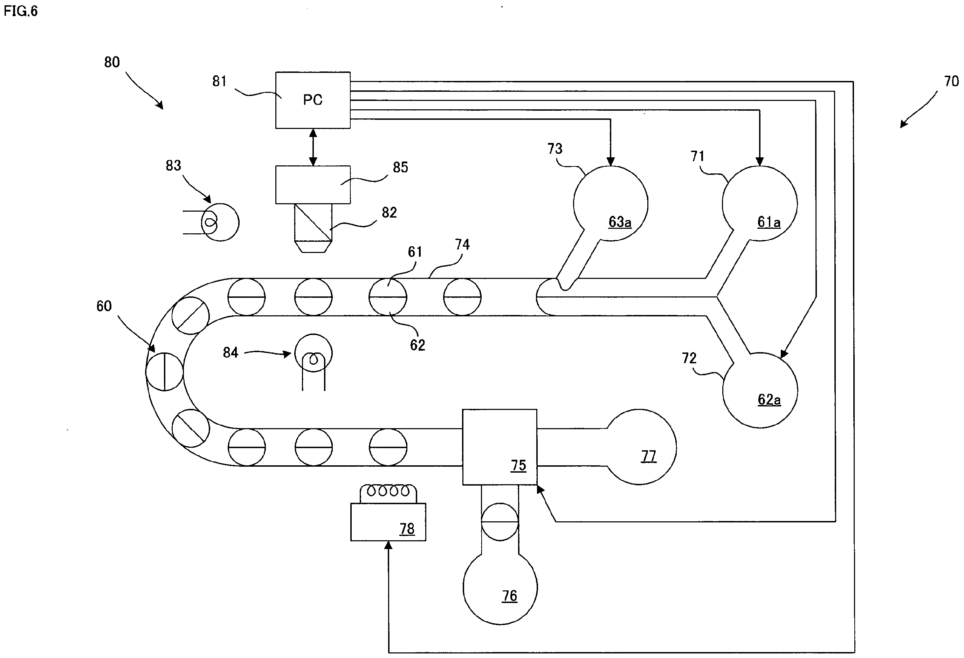

FIG. 6 shows an example of a particle manufacturing device 70 of the present embodiment.

First, description will be given of a device that manufactures the particle 60. The particle manufacturing device 70 of the present embodiment includes a first storage section 71 that stores a first material 61a that forms the first moiety 61 of the particle 60, a second storage section 72 that stores a second material 62a that forms the second moiety 62, a carrier storage section 73 that stores a liquid or gas carrier 63a, a flow path 74 connected to the first storage section 71, the second storage section 72, and the carrier storage section 73, and through which the first material 61a, the second material 62a, the particle 60 formed of the first material 61a and the second material 62a, and the carrier 63a flow, a branch section 75 that branches the flow path 74, a discharge section 76 connected to a first one of branches branched by the branch section 75, and a discard section 77 connected to a second one of the branches branched by the branch section 75.

The particle manufacturing device 70 of the present embodiment includes a particle inspection device 80 that inspects the particle 60 and controls each section. The particle inspection device 80 includes a control section 81, such as a personal computer, a microscope 82 for observing the particle 60, a reflected light source 83 that illuminates the particle 60 with reflected light, a transmission light source 84 that illuminates the particle 60 with transmission light, an imaging section 85 that captures an image observed with the microscope 82, and a hardening section 78 that hardens the particle 60.

Description will be given of a manufacturing method of the particle 60.

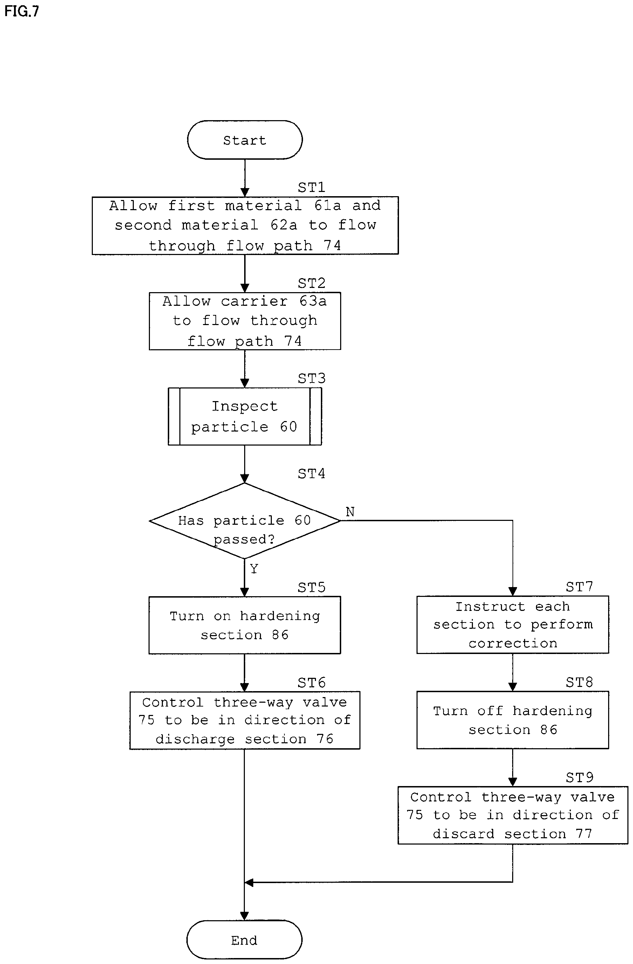

FIG. 7 shows a flowchart of the particle manufacturing method.

First, in Step 1, a predetermined amount of the first material 61a and the second material 62a are allowed to flow from the first storage section 71 and the second storage section 72, respectively, to the flow path 74 of a microchannel (ST1).

An amount of the first material 61a and the second material 62a allowed to flow through the flow path 74 of microchannel is calculated by the control section 81, and controlled by operating a valve and the like. The first material 61a and the second material 62a which are allowed to flow through the flow path 74 form a two-phase flow. The microchannel is preferably transparent. For example, an inorganic substance, such as quartz glass or soda-lime glass, an organic substance, such as SU-8 or polydimethylsiloxane, may be used for the microchannel.

Next, in Step 2, a predetermined amount of the carrier 63a is allowed to flow from the carrier storage section 73 to the flow path 74, and the two-phase flow is cut out at a predetermined length (ST2).

An amount and a timing of the carrier 63a allowed to flow through the flow path 74 are calculated by the control section 81 from a diameter, a volume, or the like of the desired particle 60, and controlled by operating a valve, and the like. The two-phase flow formed by the first material 61a and the second material 62a cut out by the carrier 63a becomes spherical due to surface tension. The first material 61a forms the first moiety 61 and the second material 62a forms the second moiety 62 so that the particle 60 is formed.

A technique of pushing liquid to flow by using a syringe pump, a technique of pushing liquid to flow by using an air compressor, a pressure controller, and the like, a technique using an electroosmotic flow, a technique using electrophoresis, and the like can be used as a means for driving liquid in the flow path 74 of a microchannel.

Next, the particle 60 is inspected in Step 3 (ST3) .

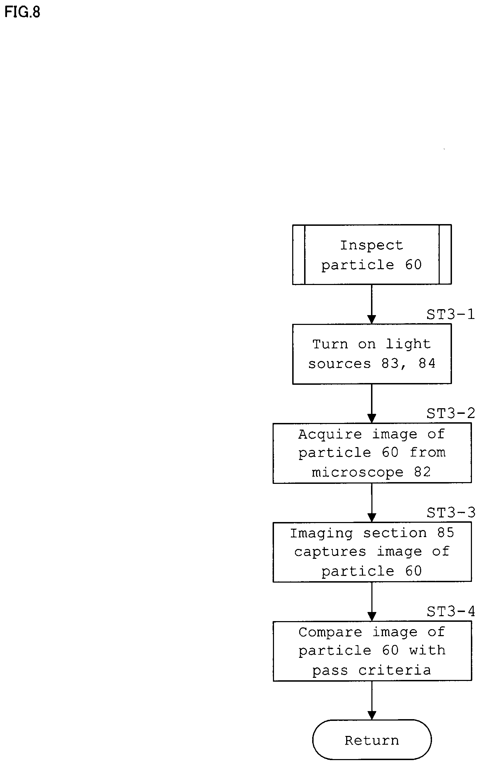

FIG. 8 shows a flowchart of a particle inspection method.

First, in Step 3-1, the light sources 83 and 84 are turned on (ST3-1) . An incandescent lamp, a fluorescent lamp, an ultrahigh pressure mercury lamp, a metal halide lamp, an LED, a laser, and the like can be used as the light sources 83 and 84. A bandpass filter or the like that allows only a necessary band to pass through may be combined. For example, illumination can be performed only with ultraviolet rays, visible light, or infrared rays.

Next, in Step 3-2, an image of the particle 60 is obtained from the microscope 82 (ST3-2) . A magnification of an object lens of the microscope 82 is preferably 10 to 100. An NA of the object lens is preferably made large in order to distinguish a small difference in light emitted from the first moiety 61 and the second moiety 62. Observation using the microscope 82 may be performed in a bright field and a dark field.

Next, in Step 3-3, the imaging section 85 captures the image of the particle 60 obtained from the microscope 82 (ST-3-3). For example, a CCD or a CMOS may be used for the imaging section 85.

Next, in Step 3-4, the control section 81 compares the captured image of the particle 60 with pass criteria determined in advance (ST3-4) . After that, the process moves to Step 4.

A mark for determining pass or fail is preferably, for example, a ratio between the first moiety 61 and the second moiety 62, or a diameter, a cross-sectional area, a volume, or the like of the particle 60. The image of the particle 60 may be applied with image processing by using software and the like. The image may be compared with pass criteria adapted to the image processing to determine pass or fail after the image processing is performed.

Next, in Step 4, pass or fail of the particle 60 is determined (ST4).

When the particle 60 passes in Step 4, the hardening section 78 is turned on in Step 5 (ST5). The hardening section 78 is turned on to harden the particle 60. Thermosetting, ultraviolet curing, electron beam curing, or the like may be used as a means for hardening.

Next, in Step 6, the branch section 75 is controlled to be in a direction of the discharge section 76 (ST6). The particle 60 passes through the discharge section 76 to be discharged.

For example, a mechanical means of a three-way valve or a four-way valve, a micro electro mechanical systems (MEMS) actuator, a method of deforming a channel by air pressure or the like when the channel is made from an elastic materials, such as polydimethylsiloxane, a method of controlling a flow path by changing wettability of a channel by using electrowetting, a method of providing a dam structure, a well structure, and the like in the channel so as to trap only a ball of a hardened solid body, or a method of providing a Y-shaped or cross-shaped branch channel to allow a carrier fluid to flow separately and controlling a flow path by adjusting a flow rate of the carrier fluid can be used for the branch section 75. The control section 81 performs feed-forward control, in which the branch section 75 is switched in advance during a period of time from when pass or fail of the image captured by the imaging section 85 is determined until when the ball reaches a branch point.

When the particle 60 fails in Step 4, the control section 81 instructs each section to perform correction in Step 7 (ST7). For example, feedback control for increasing or decreasing an amount of the first material 61a, the second material 62a, the carrier 63a, or the like allowed to flow through the flow path 74 is preferably performed.

Next, in Step 8, the hardening section 78 is turned off (ST8). By turning off the hardening section 78, the particle 60 is not hardened.

Next, in Step 9, the branch section 75 is controlled to be in a direction of the discard section 77 (ST9). The particle 60 passes through the discard section 77 and is discarded.

The manufacturing method of the particle 60 can be used for a multicolor particle.

Next, description will be given of a manufacturing method of the optical sheet 50 and the screen 40.

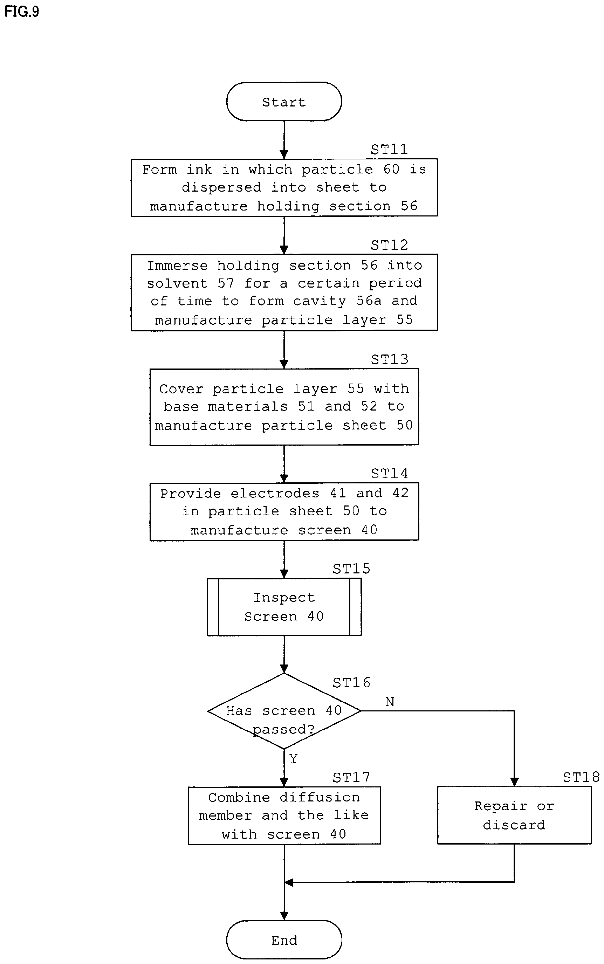

FIG. 9 shows a flowchart of a screen manufacturing method.

First, in Step 11, ink obtained by dispersing the manufactured particle 60 in polymerizable silicone rubber is manufactured. The ink is extended on a smooth base material by a coater or the like, and polymerized by heating, drying, and the like to be formed into a sheet (ST11). By the above process, the holding section 56 holding the particle 60 can be obtained.

Next, in Step 12, the holding section 56 is immersed in the liquid 57, such as silicone oil, for a certain period of time, and a cavity 56a is formed (ST12). When the holding section 56 is swollen, a gap filled with the liquid 57 is formed between the holding section 56 formed of silicone rubber and the like and the particle 60. As a result, the cavity 56a housing the liquid 57 and the particle 60 is formed, and the particle layer 55 is manufactured.

Next, the screen 40 is manufactured by using the particle layer 55. The screen can be manufactured by a manufacturing method disclosed in JP 2011-112792 A and the like.

First, in Step 13, the particle layer 55 is covered with a pair of the first base material 51 and the second base material 52 shown in FIG. 4, and the particle layer 55 is sealed by using a laminate, an adhesive, and the like (ST13). In this manner, the optical sheet 50 is manufactured.

Next, in Step 14, the first electrode 41 and the second electrode 42 are provided on the optical sheet 50 (ST14). By further laminating the first cover layer 46 and the second cover layer 47, the screen 40 can be obtained.

By using the above method, the optical sheet 50 and the screen 40 of a large size can be manufactured easily.

Next, in Step 15, the particle 60 is inspected (ST15).

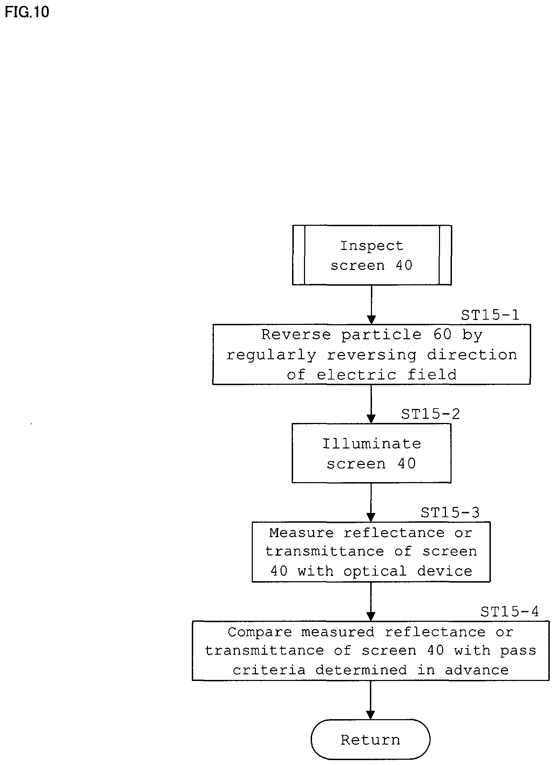

FIG. 10 shows a flowchart of a screen inspection method.

First, in Step 15-1, the direction of the electric field is reversed regularly to reverse the particle 60 in the screen 40 (ST15-1). Next, in Step 15-2, the screen 40 is illuminated (ST15-2).

Next, in Step 15-3, a reflectance or a transmittance of the screen 40 is measured with an optical device (ST15-3). For example, an imaging device including a CCD, a CMOS, or the like, or a photometry device including a photodetector, such as a photoresistor or a photodiode, that measures not an image but a spot, can be used as the optical device. Specifically, a luminance meter, an illuminometer, a camera, a power meter, or the like can be used.

Next, in Step 15-4, the measured reflectance or transmittance of the screen 40 is compared with pass criteria determined in advance (ST15-4). The pass criteria determined in advance are, for example, responsiveness of a reflectance or a transmittance with respect to input of an electric field, and the like.

Next, in Step 16, pass or fail of the screen 40 is determined (ST16).

When the screen 40 passes in Step 16, a diffusion member and the like are combined with the screen 40 in Step 17 (ST17). The diffusion member is, for example, a Fresnel lens, a lenticular lens, a microlens array, a black stripe, a black matrix, an ultraviolet cutting layer.

Next, description will be given of a function when an image is displayed by using the display device 10 shown in FIG. 1.

By control from the control device 35, the coherent light source 21 of the projector 20 oscillates coherent light. Light from the projector 20 is emitted to the screen 40 through an optical path adjusted by a scanning device (not shown). The scanning device adjusts an optical path so that light scans on the screen 40 as shown in FIG. 2. However, emission of coherent light performed by the coherent light source 21 may be controlled by the control device 35. The control device 35 stops emission of coherent light from the coherent light source 21 in accordance with an image to be displayed on the screen 40. Operation of the scanning device included in the projector 20 has become at a high speed to an extent that the operation cannot be analyzed with an eye E of a human. Accordingly, an observer observes simultaneously light emitted to positions on the screen 40 at different times. The projector 20 may be provided internally with a control device (not shown) separate from the control device 35, and controlled by the internal control section.

Light projected on the screen 40 passes through the first cover layer 46 and the first electrode 41 and reaches the optical sheet 50. The light is diffused and reflected by the particle 60 of the optical sheet 50, and emitted in a variety of directions on an observer side of the screen 40. Accordingly, the observer can observe reflected light from positions on the screen 40 at positions on the observer side of the screen 40. As a result, the observer can observe an image corresponding to an area illuminated with coherent light on the screen 40.

The coherent light source 21 may also include a plurality of light sources that emit coherent light in wavelength regions different from each other. In this case, the control device 35 controls a light source corresponding to light in each wavelength region independently of the other light sources. As a result, a color image can be displayed on the screen 40.

In general, when an image is formed on a screen by using coherent light, a speckle of a spot pattern is observed. One cause of the speckle is considered to be that coherent light typified by laser light generates an interference pattern on an optical sensor surface or a retina of a human after being diffused on the screen. In particular, when coherent light is emitted to the screen by raster scanning, the coherent light is incident on positions on the screen from a certain incident direction. Accordingly, when raster scanning is employed, a speckle wave surface generated at each point of the screen is immobile as long as the screen does not oscillate, and, when a speckle pattern is visually recognized together with an image by an observer, image quality of a displayed image is significantly deteriorated.

On the other hand, the screen 40 of the display device 10 of the present embodiment temporally changes a diffusion wave surface. When the diffusion wave surface on the screen 40 is changed, a speckle pattern on the screen 40 is temporally changed. When a temporal change on the diffusion wave surface is made at a sufficiently high speed, speckle patterns are superposed on each other and averaged. In this manner, a speckle can be made hardly conspicuous to an observer.

As shown in FIG. 1, the screen 40 includes a pair of the first electrode 41 and the second electrode 42. The first electrode 41 and the second electrode 42 are electrically connected to the power source 30. That is, the power source 30 can apply a voltage to the first electrode 41 and the second electrode 42. When a voltage is applied between the first electrode 41 and the second electrode 42, an electric field is formed on the optical sheet 50 positioned between the first electrode 41 and the second electrode 42.

As shown in FIG. 5, the particle 60 including the first moiety 61 and the second moiety 62 having different dielectric constants are movably held on the particle layer 55 of the optical sheet 50. The particle 60 is electrified in the first place, or, when at least an electric field is formed, a dipole moment is generated. Accordingly, the particle 60 moves in accordance with a vector of a formed electric field. When the particle 60 having a function of changing a traveling direction of light, for example, a reflecting function and a diffusing function, performs a rotating movement in the direction of an arrow A shown in FIG. 5, a diffusion characteristic of the screen 40 is temporally changed. As a result, a speckle can be made hardly conspicuous to an observer.

An arrow La in FIG. 5 shows image light emitted from the projector 20 to the screen 40. An arrow Lb is image light diffused on the screen 40. Dielectric constants different between the first moiety 61 and the second moiety 62 of the particle 60 are sufficiently different when the dielectric constants are different to an extent that a speckle reduction function can be expressed. Accordingly, whether or not dielectric constants are different between the first moiety 61 and the second moiety 62 of the particle 60 can be determined based on whether or not the particle 60 movably held can move along with a change in electric field vector.

The principle that the particle 60 moves with respect to the holding section 56 is that a direction and a position of the particle 60 are changed so that an electric charge or a dipole moment of the particle 60 is in a stable positional relationship with respect to an electric field vector. Accordingly, when a constant electric field is continuously applied to the particle layer 55, a movement of the particle 60 stops after a certain period of time. On the other hand, in order to make a speckle hardly conspicuous, a movement of the particle 60 with respect to the holding section 56 needs to continue. In view of the above, the power source 30 applies a voltage so that an electric field formed on the particle layer 55 temporally changes. In the present embodiment, the power source 30 applies a voltage between the first electrode 41 and the second electrode 42 so as to reverse a vector of an electric field generated in the optical sheet 50.

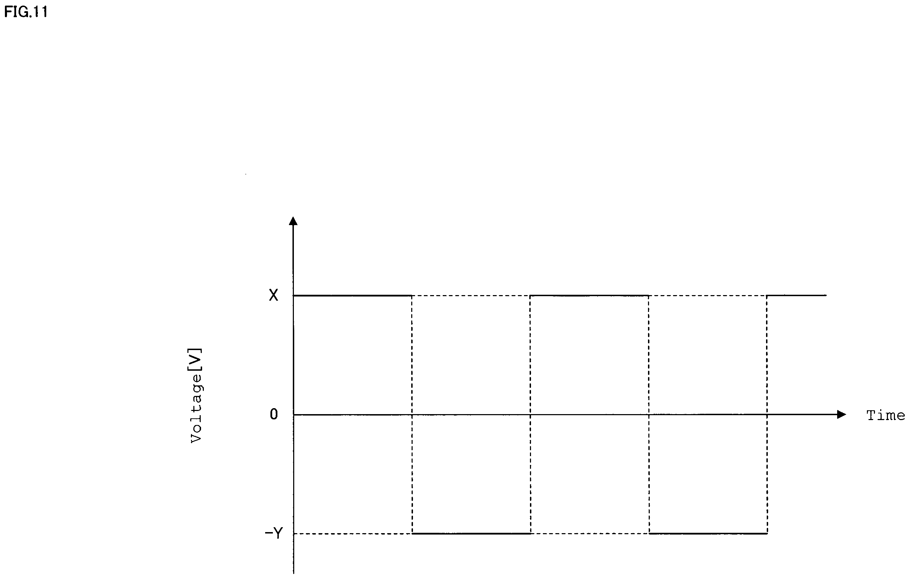

FIG. 11 shows an example of a voltage applied to the screen 40.

As shown in FIG. 11, X[V] and -Y[V] are alternately applied as a voltage between the first electrode 41 and the second electrode 42 of the present embodiment. The applied voltages X[V] and -Y[V] may have absolute values which are the same or different. The configuration may be such that voltages of three or more different values are applied. Further, the configuration may be such that the applied voltage is continuously changed in such a manner that a normal AC voltage is employed.

The particle 60 is housed in the cavity 56a formed on the holding section 56. As shown in FIG. 5, the particle 60 has an external form of a substantially spherical shape. The cavity 56a that houses the particle 60 has an internal form of a substantially spherical shape. Accordingly, the particle 60 can rotationally oscillate around a rotation axis ra that extends in a direction orthogonal to a surface of the drawing of FIG. 5. However, the particle 60 can repeatedly perform not only a rotary movement but also a translational movement, depending on the size of the cavity 56a housing the particle 60. Further, the cavity 56a is filled with the liquid 57. The liquid 57 makes a movement of the particle 60 with respect to the holding section 56 smooth.

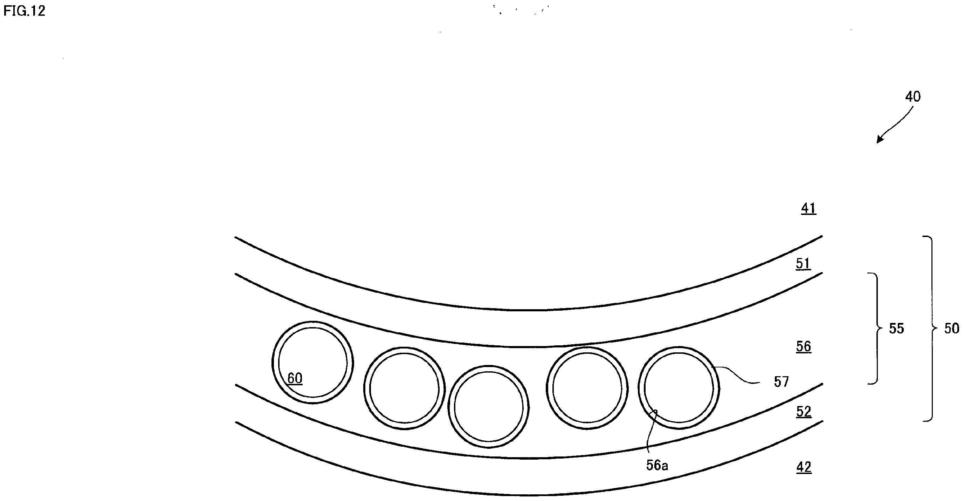

FIG. 12 shows part of a cross section of the screen 40 of another embodiment.

As shown in FIG. 12, the optical sheet 50 and the screen 40 may be manufactured to have a curved surface. To manufacture the curved surface, the sheet layer 55 may be heated on a curved surface and polymerized when the sheet layer 55 is formed into a sheet. After that, the base materials 51 and 52 which are formed to have a curved surface in advance may be laminated.

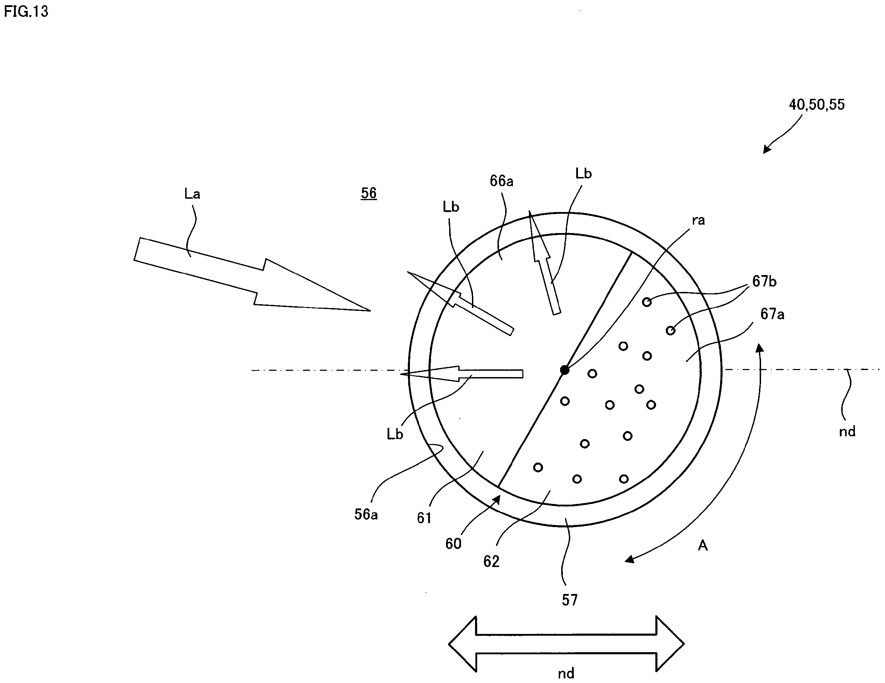

FIG. 13 shows the particle 60 in an example where colors of the first moiety 61 and the second moiety 62 are made different.

For example, although the above embodiment shows an example where the first moiety 61 and the second moiety 62 have the same color, the present invention is not limited to the example. One of the first moiety 61 and the second moiety 62 may be transparent. If one of the first moiety 61 and the second moiety 62 is transparent, the particle 60 is considered to have another color that is not transparent. Accordingly, even when the direction, attitude, and position of the particle 60 are changed, the optical sheet 50 and the screen 40 have a constant color. Accordingly, when an image is displayed, deterioration in image quality due to a color change of the screen 40 can be effectively avoided.

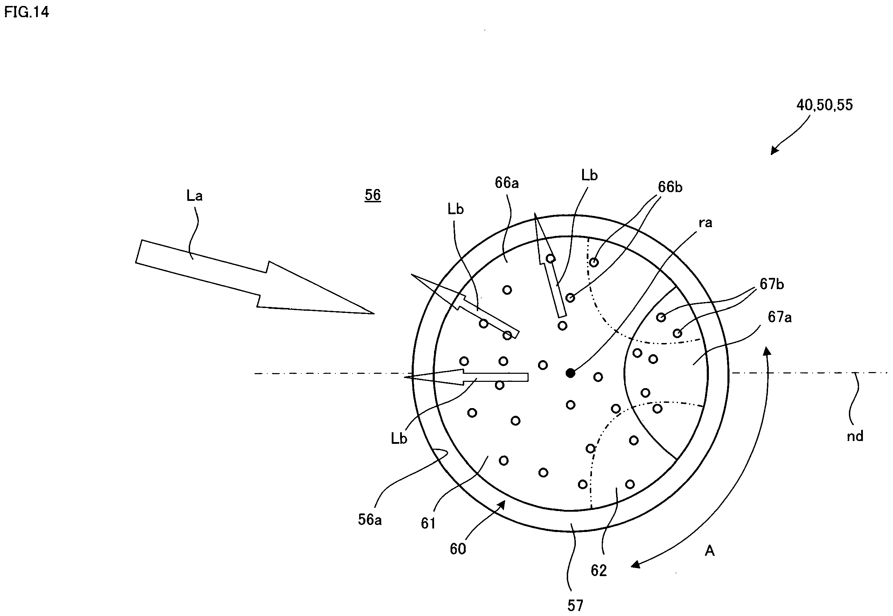

FIG. 14 shows the particle 60 in an example where volume ratios of the first moiety 61 and the second moiety 62 are made different.

Although the above embodiment shows an example where the first moiety 61 and the second moiety 62 have the same volume ratio, the present invention is not limited to the example. A volume ratio of the first moiety 61 to the particle 60 and a volume ratio of the second moiety 62 to the particle 60 may be different. In the example shown in FIG. 14, a volume ratio of the first moiety 61 is larger than a volume ratio of the second moiety 62. When such a particle 60 is used, the first moiety 61 is easily made to cover at least part of the second moiety 62 from the observer side along a normal line direction nd of the screen while the screen 40 is illuminated with light. When the second moiety 62 moves to a position shown by a two-dot chain line in FIG. 14 along with a rotating movement of the particle 60, the first moiety 61 can cover the second moiety 62 completely from the observer side along the normal line direction nd of the screen 40. Accordingly, even when the first moiety 61 and the second moiety 62 do not have strictly the same color, a color tone change of the screen 40 can be effectively made hardly sensible while an image is displayed by moving the particle 60.

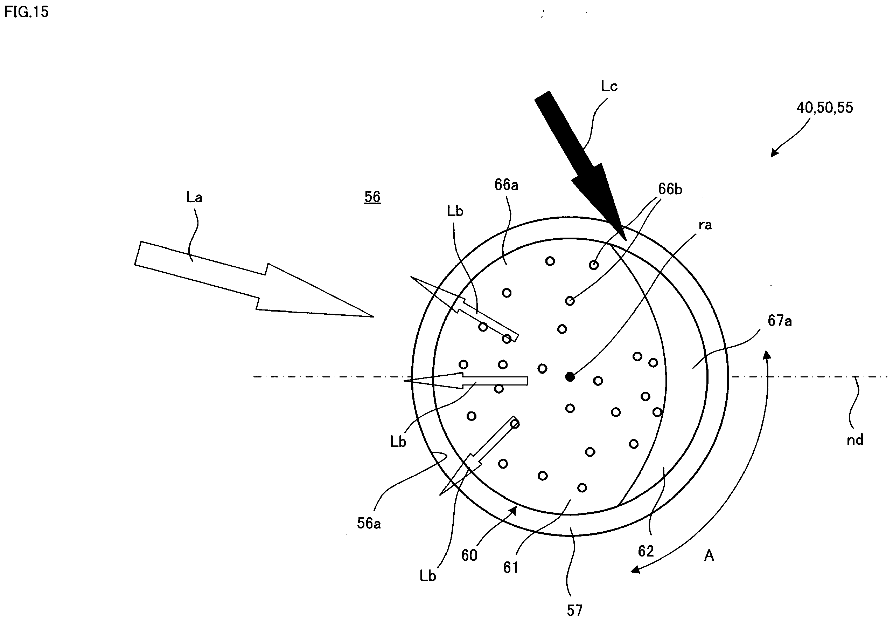

FIG. 15 shows the particle 60 in an example where a light absorption function is included.

When a color tone change of the screen 40 can be effectively made hardly sensible without receiving a large influence from a difference in colors between the first moiety 61 and the second moiety 62 by controlling drive of the particle 60, one of the first moiety 61 and the second moiety 62 may have a light absorption function. In the example shown in FIG. 15, the first moiety 61 has a light diffusion characteristic and the second moiety 62 has a light absorption function. As an example, the second moiety 62 can develop the light absorption function by containing a coloring material of a light absorption characteristic, specifically a pigment, such as carbon black and titanium black. In the particle 60 shown in FIG. 15, light Lc entering from a direction different from that of the image light La from the projector 20 can be absorbed by the second moiety 62. Light absorbed by the second moiety 62 can be, for example, ambient light from an illumination device (not shown) or the like that exists in a location in which the screen 40 is installed. By selectively absorbing the light Lc other than the image light La incident on the screen 40, contrast of a displayed image can be efficiently improved without impairing brightness of the displayed image.

The above embodiment shows an example where the screen 40 is configured as a reflection type screen. However, the present invention is not limited to the example, and the screen 40 may be configured as a transmission type screen. In the transmission type screen 40, the second electrode 42, the second cover layer 47, and the second base material 52 are configured to be transparent like the first electrode 41, the first cover layer 46, and the first base material 51, and preferably have a visible light transmittance similar to that of the first electrode 41, the first cover layer 46, and the first base material 51. The size and an amount of the diffuse components 66b and 67b added to the inside of the particle 60 are also preferably adjusted so that a transmittance of light incident on the particle 60 is higher than a reflectance of the light.

The above embodiment shows an example where the particle 60 of a single color is manufactured from a monomer having a positive electrification characteristic and a monomer having a negative electrification characteristic by using polymerization of synthetic resin, and the particle 60 is charged. However, the present invention need not be limited to the example. The particle 60 having a plurality of sections having different charging characteristics in the liquid 57 is synthesized in a variety of methods by using a publicly-known material. For example, the particle 60 may be manufactured by laminating two layers of plate-like bodies made from materials having different properties, and crushing the laminated body into a desired size. For a material having a charging characteristic, a charging control agent may be added to, for example, synthetic resin. As an example of a charging addition agent, there may be employed an ionic conductivity addition agent obtained by conjugating lithium perchlorate and the like with a polymer including polyalkylene glycol as a main component, which is used for an antistatic agent.

The above embodiment shows an example where the particle 60 is spherical. However, the present invention need not be limited to the example. The particle 60 may have an external form of a revolving ellipsoid, a cube, a rectangular parallelopiped, a cone, a cylindrical body, or the like, as long as the particle 60 can move in the cavity 56a. By allowing the particle 60 having an external form other than a spherical body to move, a temporal change in the diffusion characteristic of the screen 40 can be induced by surface reflection, without depending on an internal diffusion function of the particle 60.

The optical sheet 50, the particle layer 55, and the particle 60 may be manufactured by a method different from the method described in the above embodiment. As long as the particle 60 is movably held in the holding section 56, the liquid 57 need not be provided.

The above embodiment shows an example of a lamination structure of the screen 40. The present invention is not limited to the example, and other function layers expected to exert a specific function may be provided on the screen 40. One function layer may also exert two or more functions. For example, the first cover layer 46, the second cover layer 47, the first base material 51, the second base material 52, or the like may function as the function layer. As a function provided to the function layer, there is, for example, a reflection prevention function, a hard coat function having excoriation resistance, an ultraviolet ray shielding function, an ultraviolet ray reflection function, or an antifouling function.

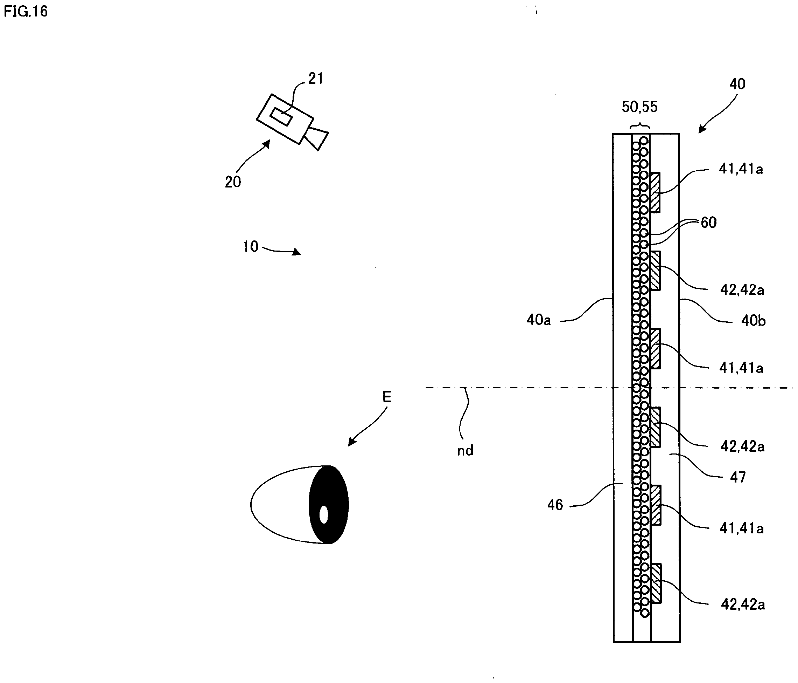

FIG. 16 shows an example of the screen 40 having a plurality of wire electrode sections.

The above embodiment shows an example where the first electrode 41 and the second electrode 42 are formed into a sheet shape, and arranged to sandwich the particle layer 55. However, the present invention need not be limited to the example. At least one of the first electrode 41 and the second electrode 42 may be formed into a stripe shape. In the example shown in FIG. 16, both of the first electrode 41 and the second electrode 42 are formed into a stripe shape. That is, the first electrode 41 includes a plurality of first wire electrode sections 41a extending linearly, and the plurality of first wire electrode sections 41a are arranged in a direction orthogonal to a longitudinal direction of the first electrode 41. Like the first electrode 41, the second electrode 42 also includes a plurality of second wire electrode sections 42a extending linearly, and the plurality of second wire electrode sections 42a are arranged in a direction orthogonal to a longitudinal direction of the second electrode 42.

In the example shown in FIG. 16, both of a plurality of the first wire electrode sections 41a constituting the first electrode 41 and a plurality of the second wire electrode sections 42a constituting the second electrode 42 are arranged on a surface opposite to an observer on a surface of the optical sheet 50. A plurality of the first wire electrode sections 41a constituting the first electrode 41 and a plurality of the second wire electrode sections 42a constituting the second electrode 42 are arranged alternately along the same arranging direction. The first electrode 41 and the second electrode 42 shown in FIG. 16 can also form an electric field on the particle layer 55 of the optical sheet 50 with a voltage applied from the power source 30.

The above embodiment describes an example in which the projector 20 projects light to the screen 40 in a raster scanning system. The present invention need not be limited to the example. The projector may project light in a system other than a raster scanning system, for example, a system in which the projector projects image light to an entire area of the screen at each moment. Even when such a projector is used, a speckle is generated. However, by using the screen described above, a diffusion wave surface temporally changes on the screen 40, so that a speckle can be effectively made hardly conspicuous. The screen described above can also be used in combination with a projector disclosed in International Publication No. 2012/033174 described in the section of Background Art. With the projector, speckles can be reduced effectively. However, with the combination of the projector and the screen, speckles can be made hardly conspicuous more effectively.

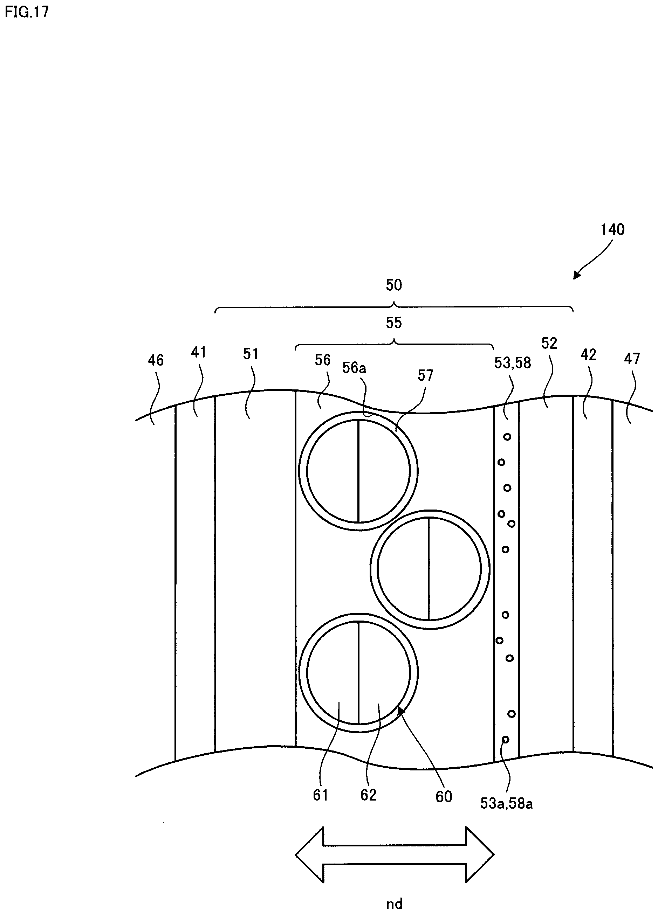

FIG. 17 shows part of a cross section of a screen 140 in another embodiment.

The screen 140 is obtained by adding diffusing sections 53 and 58 to the optical sheet 50 of the screen 40 shown in FIG. 4. The diffusing sections 53 and 58 have a function of diffusing light that passes through them. The other configurations of the screen 140 may be similar to those of the screen 40 shown in FIG. 4. A diffusing particle 58b (not shown) is included in the holding section 56 and the liquid 57 of the particle layer 55, and the particle layer 55 may have a function as a diffusing transmission layer 58.

With respect to the diffusing sections 53 and 58 of the present embodiment, the diffusing reflection layer 53 is used for a reflection type screen and the diffusing transmission layer 58 is used for a transmission type screen. The diffusing sections 53 and 58 only need to have a function of diffusing light by including diffusing fine particles 53a and 58a as shown in FIG. 17 for both of the diffusing reflection layer 53 and the diffusing transmission layer 58.

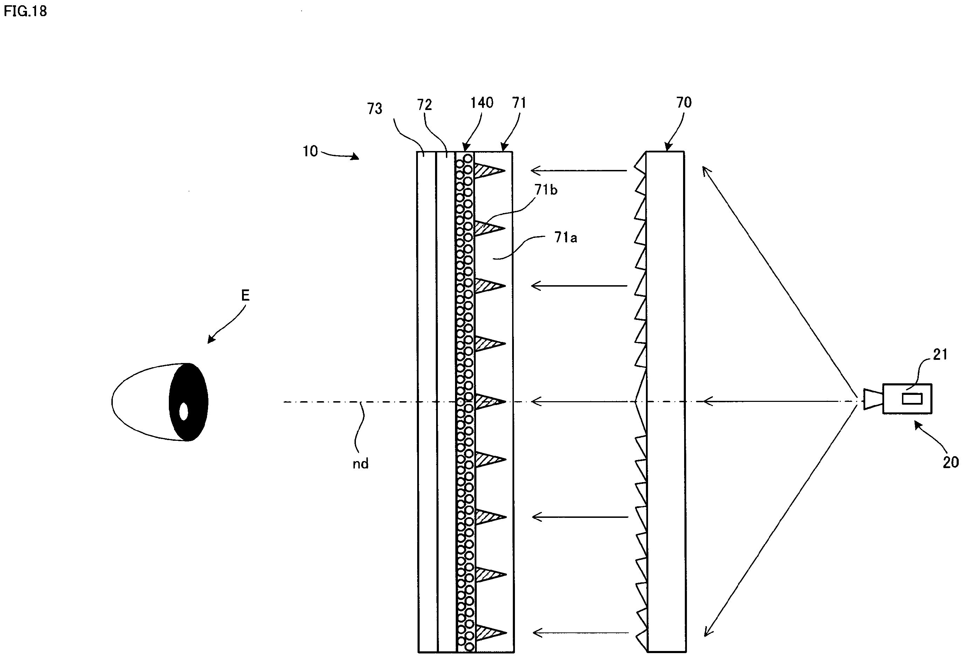

FIG. 18 shows an example of the display device 10 using the transmission type screen 140 of the present embodiment.

The transmission type display device 10 of the present embodiment includes the projector 20, and the screen 140 to which image light is emitted from the projector 20. The screen 140 only needs to include at least the electrodes 41 and 42, the particle layer 55, and the diffusing transmission layer 58 among the configurations shown in FIG. 17.

The display device 10 may also use at least one of a Fresnel lens 70 arranged between the projector 20 and the screen 140, a viewing angle enlarging section 71 that enlarges the viewing angle of the screen 140, and a colored section 72 that improves contrast. In order to improve durability of the screen 140, a hard coat section 73 may also be used.

The Fresnel lens 70 refracts light emitted from the projector 20 and emits the light as a substantially parallel light. The Fresnel lens 70 is arranged between the projector 20 and the screen 140. The Fresnel lens 70 may be either one of a concentric Fresnel lens and a linear Fresnel lens having an effect similar to that of a cylindrical lens. A Fresnel surface 70a of the Fresnel lens 70 may face either one of the projector 20 and the screen 140. The Fresnel lens 70 may be formed into a sheet shape.

By using the Fresnel lens 70, light emitted from the projector 20 can be emitted as a substantially parallel light, and image quality on the screen 140 can be improved. By forming the Fresnel lens 70 into a sheet shape, the screen 140 can be formed to be thin.

The viewing angle enlarging section 71 enlarges the viewing angle of the screen 140. In a first example shown in FIG. 18, the viewing angle enlarging section 71 includes a base material 71a, such as transparent resin or air, and a light absorption section 71b formed into a black triangular prism shape in the base material 71a. The base material 71a has a refractive index higher than that of the light absorption section 71b.

Light emitted from the projector 20 enters from the base material 71a side of the viewing angle enlarging section 71, is totally reflected on an inclined surface at the boundary between the base material 71a and the light absorption section 71b, and enlarges the viewing angle. Accordingly, most light does not enter the light absorption section 71b, and use efficiency of light can be improved. The light absorption section 71b absorbs ambient light from the observer E side. Accordingly, contrast can be improved.

In the viewing angle enlarging section 71 shown in FIG. 18, the light absorption sections 71b are formed side by side in a vertical direction on a surface of the drawing so that light is diffused in the vertical direction. However, the light absorption sections 71b may also be formed side by side in a direction from the front side of the surface of the drawing to a deeper side so that light is diffused in a horizontal direction. Alternatively, the viewing angle enlarging section 71 including the light absorption sections 71b arranged side by side in a vertical direction of the surface of the drawing and the viewing angle enlarging section 71 including the light absorption sections 71b arranged side by side in a direction from the front to the deeper side of the surface of the drawing may be superposed on each other between the projector 20 and the observer E. By superposing the viewing angle enlarging sections 71 on each other, a screen of a wide viewing angle and high contrast can be implemented efficiently without lowering use efficiency of light.

The colored section 72 is a layer which is semitransparent or colored with a coloring dye and the like, and lowers the transmittance to improve contrast. The configuration may be such that the colored section 72 is not provided as an independent layer and other sections may have a function similar to that of the colored section 72. For example, the holding section 56, the liquid 57, and the particle 60 may be colored to improve contrast. When a laser is used as a light source, the colored section 72 may be colored so as to allow only a bright line to pass through.

The hard coat layer 73 is formed by coating the top layer of the screen with a publicly-known hard coat material, and improves durability. The hard coat layer 73 may have a water permeability or a water repellent characteristic. For example, when the screen 140 is used in a low temperature environment, condensation may occur on the hard coat layer 73. For this reason, a surface of the hard coat layer 73 may be formed by coating with fluorine, silicon, or the like, or in an uneven structure, or by adhering a moisture absorption layer or an electro-thermal layer. By forming the surface of the hard coat layer 73 in the above manner, condensation and a stain can be prevented.

The display device 10 may be mounted with a touch panel function. In an infrared optical imaging system, when an infrared sensor is provided in part of the display device 10 and infrared rays are emitted from the outside, a position in contact with the display device 10 is detected by an infrared sensor as a region in which infrared radiation is shielded, and hence, a touch panel function is included. An infrared ray irradiation section may be provided separately with an irradiation device. Similarly, in an ultrasonic wave system, a transmitting element and a receiving element of an ultrasonic surface acoustic wave are installed on a surface of the display device 10, and a contact position is specified based on attenuation of the acoustic wave. A touch panel in an electrostatic capacity system or a membrane resistance system may be mounted in the inside of the display device 10 or externally. When a touch panel is mounted in the inside of the display device, a touch panel layer may be formed between the screen 140 and the colored section 72 shown in FIG. 16, or between the colored section 72 and the hard coat layer 73.

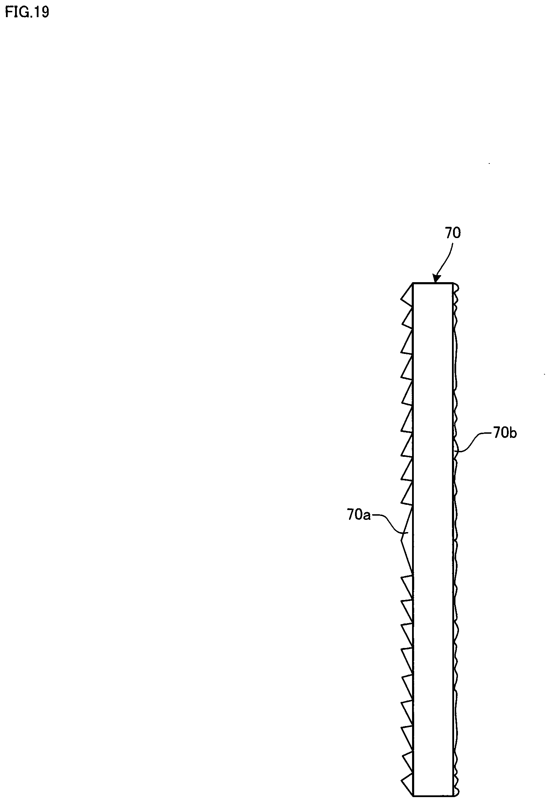

FIG. 19 shows another example of the Fresnel lens 70.

In the Fresnel lens 70, a surface opposite to the Fresnel surface 70a may be formed as a diffuse surface 70b having diffusibility. The diffuse surface 70b may have irregularities and the like formed on a surface. By forming the diffuse surface 70b described above, diffusibility of the entire screen can be improved.

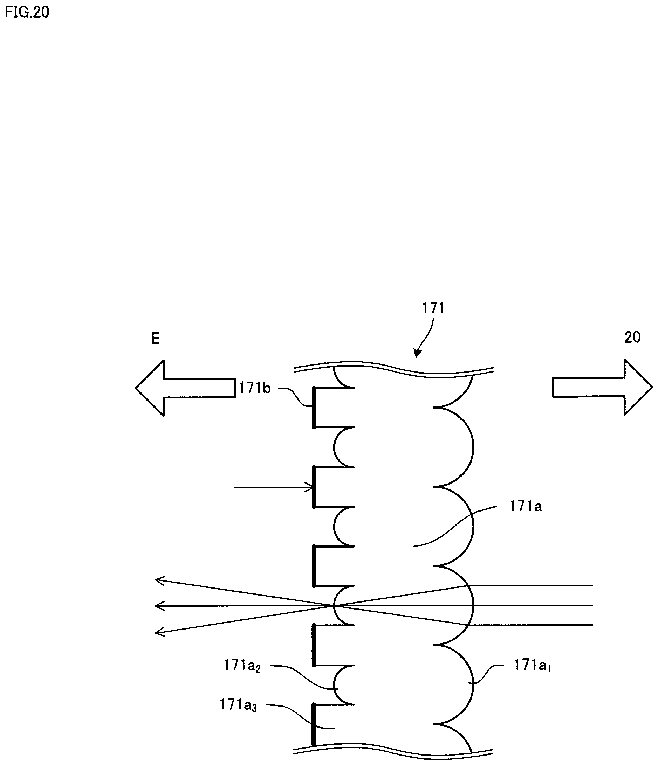

FIG. 20 shows a second example of the viewing angle enlarging section.

A viewing angle enlarging section 171 in the second example shown in FIG. 20 includes a lenticular lens 171a as a base material and a light absorption section 171b formed in part of the lenticular lens 171a.

On the lenticular lens 171a, minute and elongated first cylindrical lenses $171a_1$ are arranged side by side on a surface of a sheet on the projector 20 side, and minute and elongated second cylindrical lenses $171a_2$ and flat surface sections $171a_3$ are formed alternately on a surface of the sheet on the observer E side. The light absorption section 171b is formed on the flat surface sections $171a_3$ of the lenticular lens 171a. The lenticular lens 171a is formed by transparent resin. The light absorption section 171b is formed by black coating and the like.

Light emitted from the projector 20 enters the first cylindrical lens $171a_1$ of the lenticular lens 171a of the viewing angle enlarging section 171, and exits from the second cylindrical lens $171a_2$ to enlarge a viewing angle. Accordingly, most light does not enter the light absorption section 171b, and use efficiency of light can be improved. The light absorption section 171b absorbs ambient light from the observer E side. Accordingly, contrast can be improved.

In the viewing angle enlarging section 71 shown in FIG. 20, the first cylindrical lenses $171a_1$ and the second cylindrical lenses $171a_2$ are arranged side by side in a vertical direction of a surface of the drawing so that light is diffused in the vertical direction. Alternatively, the first cylindrical lenses $171a_1$ and the second cylindrical lenses $171a_2$ may be arranged side by side in a direction from the front to the deeper side of a surface of the drawing so that light is diffused in a horizontal direction. Alternatively, the viewing angle enlarging section 171 including the first cylindrical lenses $171a_1$ and the second cylindrical lenses $171a_2$ arranged side by side in a vertical direction of the surface of the drawing and the viewing angle enlarging section 171 including the first cylindrical lenses $171a_1$ and the second cylindrical lenses $171a_2$ arranged side by side in a direction from the front to the deeper side of the surface of the drawing may be superposed on each other between the projector 20 and the observer E. By superposing the viewing angle enlarging sections 171 on each other, a screen of a wide viewing angle and high contrast can be implemented efficiently without lowering use efficiency of light.

The viewing angle enlarging section 71 may be a microlens array or the like. The light absorption section 171b may be a pinhole array or the like.

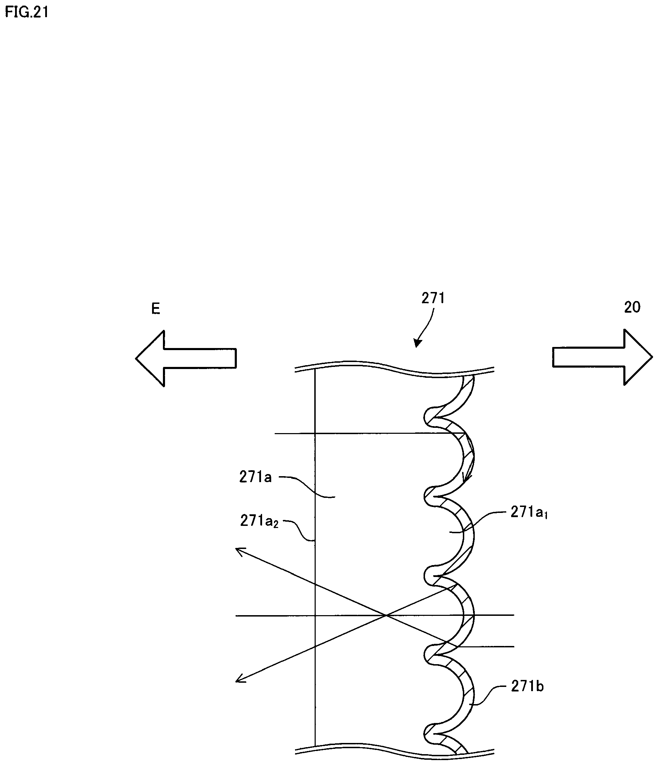

FIG. 21 shows a third example of the viewing angle enlarging section.

A viewing angle enlarging section 271 of the third example shown in FIG. 21 incudes a lenticular lens 271a as a base material and a light absorption section 271b formed in part of the lenticular lens 271a.

On the lenticular lens 271a, minute and elongated cylindrical lenses $271a_1$ are arranged side by side on a surface of a sheet on the projector 20 side, and a flat surface section $271a_3$ is formed on a surface of the sheet on the observer E side. The lenticular lens 271a is formed by transparent resin. The light absorption section 271b is formed to cover the cylindrical lens $271a_1$ of the lenticular lens 271a. The light absorption section 271b is formed in a layer by coating and the like.

Light emitted from the projector 20 enters the light absorption section 271b of the viewing angle enlarging section 271, and exits from the flat surface section $271a_3$ to enlarge a viewing angle. The light absorption section 271b repeats internal reflection, and attenuates ambient light from the observer E side. Accordingly, contrast can be improved.

In the viewing angle enlarging section 71 shown in FIG. 21, the cylindrical lenses $271a_1$ are arranged side by side in a vertical direction of a surface of the drawing so that light is diffused in the vertical direction. Alternatively, the cylindrical lenses $271a_1$ may be arranged side by side in a direction from the front to the deeper side of a surface of the drawing so that light is diffused in a horizontal direction. Alternatively, the viewing angle enlarging section 271 including the cylindrical lenses $271a_1$ arranged side by side in a vertical direction of the surface of the drawing and the viewing angle enlarging section 271 including the cylindrical lenses $171a_1$ arranged side by side in a direction from the front to the deeper side of the surface of the drawing may be superposed on each other between the projector 20 and the observer E. By superposing the viewing angle enlarging sections 271 on each other, a screen with a wide viewing angle and high contrast can be implemented efficiently without lowering use efficiency of light.

The viewing angle enlarging section 71 may be a microlens array or the like.

Next, description will be made further on the diffusing sections 53 and 58 of the reflection type and the transmission type according to the present embodiment. With respect to the diffusing sections 53 and 58 of the present embodiment, the diffusing reflection layer 53 is used for the reflection type screen 40 and the diffusing transmission layer 58 for the transmission type screen 140. The diffusing sections 53 and 58 only need to have a function of diffusing light by including the diffusing fine particles 53a and 58a as shown in FIG. 17 for both of the diffusing reflection layer 53 and the diffusing transmission layer 58.

For the diffusing reflection layer 53, a metal compound, such as titanium oxide, having a large refractive index difference from a main component, such as acrylic resin, may be used for the diffusing fine particle 53a. The diffusing fine particle 53a having a large refractive index difference from the main component is preferably used as a reflection type, since back-scattering occurs more frequently.

For the diffusing transmission layer 58, a resin bead or a material, such as silicon dioxide, having a small refractive index difference from a main component, such as acrylic resin, may be used for the diffusing fine particle 53a. The diffusing fine particle 53a having a small refractive index difference from the main component is preferably used as a transmission type, since forward scattering occurs more frequently.

As shown in FIG. 7, the diffusing sections 53 and 58 may be separated from the particle layer 55. An air layer may be provided between the diffusing sections 53 and 58 and the particle layer 55. The diffusing sections 53 and 58 may be provided on both sides of the particle layer 55.

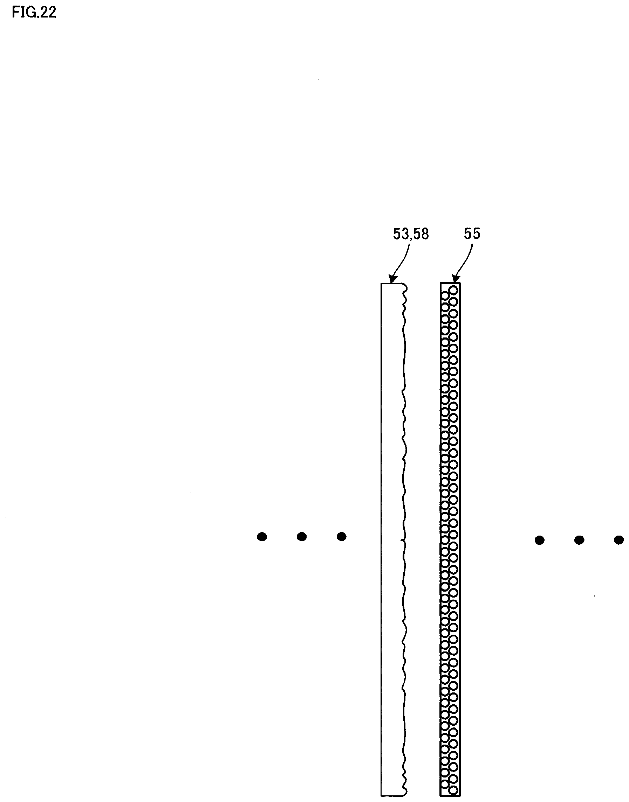

FIG. 22 shows another example of the diffusing sections 53 and 58.

The diffusing sections 53 and 58 may be used as the diffusing reflection layer 53 and the diffusing transmission layer 58 by forming irregular concave and convex on a surface. In this case, the concave and convex of the diffusing sections 53 and 58 may be formed on the particle layer 55 side. As shown in FIG. 22, the diffusing sections 53 and 58 may be separated from the particle layer 55. An air layer may be provided between the diffusing sections 53 and 58 and the particle layer 55. The diffusing sections 53 and 58 may be provided on both sides of the particle layer 55.

Next, description will be made further on the particle 60. As shown in FIG. 5, in the present embodiment, the particle 60 is a multi-phase polymer particle, and includes the first moiety 61 and the second moiety 62. The first moiety 61 and the second moiety 62 may be reworded as the first polymer section 61 and the second polymer section 62.

For the reflection type particle 60, acrylic resin or the like may be used for the first main section 66a and the second main section 67a of the particle 60, and a metal compound, such as titanium oxide, having a large refractive index difference from the first main section 66a and the second main section 67a may be used for the first diffuse components 66b and the second diffuse component 67b. The first main section 66a and the second main section 67a, and the first diffuse component 66b and the second diffuse component 67b having a large refractive index difference are preferably used as a reflection type, since back-scattering occurs more frequently.

In the transmission type particle 60, acrylic resin and the like may be used for the first main section 66a and the second main section 67a of the particle 60, and a material, such as silicon dioxide, having a small refractive index difference from the first main section 66a and the second main section 67a may be used for the first diffuse component 66b and the second diffuse component 67b. The first main section 66a and the second main section 67a, and the first diffuse component 66b and the second diffuse component 67b having a small refractive index difference are preferably used as a transmission type, since forward scattering occurs more frequently.

In the particle layer 55, the holding section 56, the liquid 57, and the particle 60 may be colored by using a coloring agent.

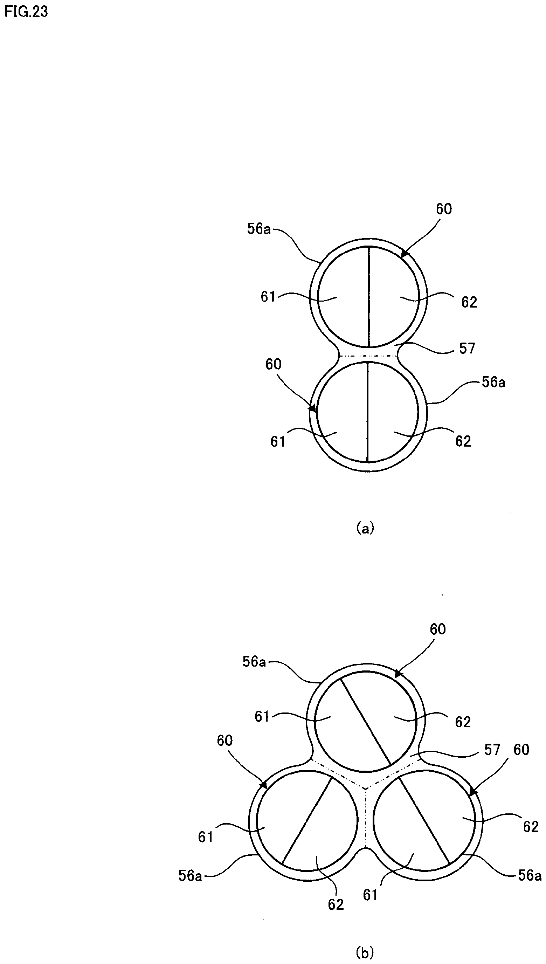

FIGS. 23A and 23B show a concept of the cavity 56a in the particle 60.

In the present embodiment, a single particle 60 is included in a single cavity 56a. The cavity 56a across which the particle 60 cannot move is considered as one unit. Accordingly, in the example shown in FIG. 23A, the particle 60 is included in each of two cavities 56a. In the example shown in FIG. 23B, the particle 60 is included in each of three cavities 56a. That is, a single particle 60 is included in a single cavity 56a.

The above embodiment shows an example where the first diffuse component 66b and the second diffuse component 67b are spherical. However, the present invention is not limited to the example. The first diffuse component 66b and the second diffuse component 67b may have an external diameter of a revolving ellipsoid, a cube, a rectangular parallelopiped, a cone, a cylindrical body, or the like.

When the first diffuse component 66b and the second diffuse component 67b have a shape of a revolving ellipsoid, a cube, a rectangular parallelopiped, a cone, a cylindrical body, or the like, a diameter refers to an area circle equivalent diameter (Heywood diameter). An area circle equivalent diameter d is obtained by the following equation:

$$d = (4 \times S / \pi)^{1/2}$$

where d is an area circle equivalent diameter, and S is an area acquired from an image of a cross section of a diffuse component observed under a transmission electron microscope (TEM).

The diameter of the particle 60 is preferably 30 $\mu$m to 200 $\mu$m. When the particle 60 has a shape which is not spherical, the area circle equivalent diameter d is obtained from the above formula as well.

The diameter is acquired from a microphotograph or an image observed under a scanning electron microscope (SEM).

In the present embodiment, a reflectance, a reflectance spectrum, a transmittance, and a transmittance spectrum are measured in a microspectroscopic method by preparing a section using a microtome. In the present embodiment, transparent indicates that a transmittance is above a reflectance in any of wavelengths in a visible light region.

In relation to the first moiety 61 and the second moiety 62 of the particle 60, that a reflectance or a reflectance spectrum at a wavelength of invisible light or a transmittance or a transmittance spectrum at a wavelength of invisible light is different indicates that the difference is 1% or higher.

When an image of a particle is compared with pass criteria determined in advance, the pass criteria are, for example, a particle diameter, particle size distribution (calculated by measuring a plurality of particles within a certain period), a transmittance at a predetermined wavelength, a transmittance spectrum, a reflectance at a predetermined wavelength, a reflectance spectrum, distribution of the above (calculated by measuring a plurality of particles within a certain period), and the like.

A ratio between a first area and a second area is measured by using a microchannel method from an image in which a boundary surface between the first area and the second area is formed in a depth direction when observed from above a microchip.

According to the above example of the particle 60 of the present embodiment, the first moiety 61 and the second moiety 62 having different dielectric constants are included. Between the first moiety 61 and the second moiety 62, a reflectance or a reflectance spectrum at a wavelength of invisible light, or a transmittance or a transmittance spectrum at a wavelength of invisible light is different. Accordingly, when the first moiety 61 and the second moiety 62 are used for the optical sheet 50 and the screen 40, speckles can be sufficiently reduced, and deterioration in image quality due to a color change can be avoided effectively. Since the first moiety 61 and the second moiety 62 react differently to light of a predetermined wavelength, a normal movement of the particle 60 can be checked.

According to an example of the particle 60 of the present embodiment, the predetermined wavelength is in an ultraviolet band or an infrared band. Accordingly, a general light source of ultraviolet rays or infrared rays can be used.

According to an example of the particle 60 of the present embodiment, at least one of the first moiety 61 and the second moiety 62 is excited by ultraviolet radiation, and emits fluorescence of ultraviolet rays, visible light, or infrared rays. Accordingly, a movement of the particle 60 can be checked easily.

According to an example of the particle 60 of the present embodiment, at least one of the first moiety 61 and the second moiety 62 is excited by visible light radiation or infrared radiation, and emits fluorescence of infrared rays. Accordingly, a movement of the particle 60 can be checked easily.

According to an example of the particle 60 of the present embodiment, at least one of the first moiety 61 and the second moiety 62 is excited by ultraviolet radiation, and a movement of the particle 60 that emits phosphorescence of ultraviolet rays, visible light, or infrared rays can be checked easily.

According to an example of the particle 60 of the present embodiment, at least one of the first moiety 61 and the second moiety 62 is excited by visible light radiation or infrared radiation, and emits phosphorescence of infrared rays. Accordingly, a movement of the particle 60 can be checked easily.

According to an example of the particle 60 of the present embodiment, the first moiety and the second moiety have a single color or is transparent in a visible light region. Accordingly, a diffusion wave surface can be temporally changed without changing a reflection color or a transmission color unique to the screen not including video light.

According to an example of the optical sheet 50 of the present embodiment, there is included the particle layer 55 including the holding section 56 having a predetermined thickness and the particle 60 housed in the cavity 56a formed in the holding section 56. Accordingly, when the screen 40 is used, speckles can be sufficiently reduced, and deterioration in image quality due to a color change can be effectively avoided.

According to an example of the optical sheet 50 of the present embodiment, the base materials 51 and 52 sandwiching the particle layer 55 are included. Accordingly, rigidity of the optical sheet 50 can be improved.

According to an example of the screen 40 of the present embodiment, there are included the optical sheet 50 and the electrodes 41 and 42 that form an electric field for driving the particle 60 of the particle layer 55 by being applied with a voltage. Accordingly, the particle 60 including the first moiety 61 and the second moiety 62 having different dielectric constants can be moved accurately in accordance with an electric field formed by the electrodes 41 and 42. By a movement of the particle 60, a diffusion characteristic of the screen 40 is temporally changed and speckles can be sufficiently reduced, and deterioration in image quality due to a color change can be avoided effectively.

According to an example of the screen 40 of the present embodiment, an optical layer that absorbs or reflects an ultraviolet band is included. Accordingly, when the screen 40 is used outdoors, fluorescence or phosphorescence due to excitation of the particle 60 can be restrained from being seen.

According to an example of the display device 10 of the present embodiment, there are included the screen 40 and the projector 20 that emits coherent light to the screen 40. Accordingly, speckles of coherent light emitted from the projector 20 can be sufficiently reduced, and deterioration in image quality due to a color change can be avoided effectively.

According to an example of the display device 10 of the present embodiment, there are further included the power source 30 that applies a voltage to the electrodes 41 and 42 of the screen 40 and the control device 35 that controls an applied applied to the electrodes 41 and 42 from the power source 30. The control device 35 controls an applied voltage from the power source 30 so as to move the particle 60 in the particle layer 55. Accordingly, the particle 60 can be moved more accurately, and speckles can be reduced more sufficiently.

According to an example of the display device 10 of the present embodiment, the control device 35 controls an applied voltage from the power source 30 so as to repeatedly rotate the particle 60 within an angular range smaller than 180°. Accordingly, at least one of the first moiety 61 and the second moiety 62 can be selected and positioned on an observer side accurately.

According to an example of the display device 10 of the present embodiment, the control device 35 controls at least one of a direction and a position of the particle 60 based on an applied voltage from the power source 30 so that the first moiety 61 covers at least part of the second moiety 62 from an observer side along a normal line direction of the screen 40. Accordingly, even when the first moiety 61 and the second moiety 62 do not have strictly the same color, a color tone change of the screen 40 can be effectively made hardly sensible while an image is displayed by moving the particle 60.

According to an example of the particle inspection device 80 of the present embodiment, there are included the microscope 82 for observing the particle 60, the light sources 83 and 84 that illuminate the particle 60, the imaging section 85 that captures an image observed with the microscope 82, and the control section 81 that compares an image of the particle 60 captured by the imaging section 85 with pass criteria determined in advance. Accordingly, the particle 60 can be inspected accurately.

According to an example of the particle manufacturing device 70 of the present embodiment, there are included the first storage section 71 that stores the first material 61a that forms the first moiety 61 of the particle 60, the second storage section 72 that stores the second material 62a that forms the second moiety 62 of the particle 60, the carrier storage section 73 that stores the liquid or gas carrier 63a, the flow path 74 that is connected to the first storage section 71, the second storage section 72, and the carrier storage section 73, and through which the first material 61a, the second material 62a, the particle 60 formed by the first material 61a and the second material 62a, and the carrier 63a flow, the hardening section 78 that hardens the particle 60, the branch section 75 that branches the flow path 74, the discharge section 76 that is connected to one branch branched by the branch section 75, the discard section 77 connected to the other branch branched by the branch section 75, and the particle inspection device 80. When an image of the particle 60 captured by the imaging section 85 satisfies pass criteria determined in advance, the control section 81 controls the hardening section 78 to harden the particle 60 and then the branch section 75 to allow the particle 60 to be discharged from the discharge section 76. When an image of the particle 60 captured by the imaging section 85 does not satisfy the pass criteria determined in advance, the control section 81 controls the branch section 75 so that the particle 60 is discarded from the discard section 77. Accordingly, the particle 60 can be manufactured accurately.

According to an example of the particle manufacturing device 70 of the present embodiment, when an image of the particle 60 captured by the imaging section 85 does not satisfy pass criteria determined in advance, the control section 81 controls at least one of a flow rate of the first material 61a that flows out from the first storage section 71 and a flow rate of the second material 62a that flows out from the second storage section 72. Accordingly, feedback can be made immediately, and waste can be reduced.

According to an example of the particle inspection method of the present embodiment, there are included a step of illuminating the particle 60, a step of capturing an image of the particle 60, and a step of comparing the captured image of the particle 60 with pass criteria determined in advance. Accordingly, the particle 60 can be inspected accurately.

According to an example of the particle manufacturing method of the present embodiment, there are included a step of allowing a predetermined amount of the first material 61a that forms the first moiety 61 and the second material 62a that forms the second moiety 62 to flow through a flow path, a step of allowing a predetermined amount of the carrier 63a to flow through the flow path 74 and cutting out a two-phase flow formed by the first material 61a and the second material 62a, a step of executing the particle inspection method, a step of hardening and then discharging the particle 60 when the particle 60 satisfies pass criteria determined in advance, and a step of discarding the particle 60 without hardening when the particle 60 does not satisfy pass criteria determined in advance. Accordingly, the particle 60 can be manufactured accurately.

According to an example of the particle manufacturing method of the present embodiment, when the particle 60 does not satisfy pass criteria determined in advance, at least one of a flow rate of the first material 61a and a flow rate of the second material 62a is controlled. Accordingly, feedback can be made immediately, and hence, waste can be reduced.

According to an example of the screen manufacturing method of the present embodiment, there are included a step of forming ink in which the particle 60 formed by the particle manufacturing method is dispersed into a sheet, a step of manufacturing the particle layer 55 in which the cavity 56a is formed around the particle 60 by immersing a sheet in liquid, a step of manufacturing the optical sheet 50 by sandwiching the particle layer 55 between the base materials 51 and 52, and a step of manufacturing the screen 40 by providing the electrodes 41 and 42 that form an electric field in the optical sheet 50. Accordingly, the screen 40 can be manufactured accurately.

According to an example of the screen inspection method of the present embodiment, there are included a step of reversing the particle 60 by regularly reversing a direction of an electric field with respect to the screen 40 manufactured by the screen manufacturing method, a step of illuminating the screen 40, a step of measuring a reflectance or a transmittance of the screen 40 with an optical device, and a step of comparing the measured reflectance or transmittance of the screen 40 with pass criteria determined in advance. Accordingly, the screen 40 can be inspected accurately.

According to an example of the particle 60 of the present embodiment, the first moiety 61 and the second moiety 62 having different dielectric constants are included, and at least one of the first moiety 61 and the second moiety 62 is excited by ultraviolet radiation and emits fluorescence of ultraviolet rays, visible light, or infrared rays. Accordingly, a movement of the particle 60 can checked easily.

According to an example of the particle 60 of the present embodiment, the first moiety 61 and the second moiety 62 having different dielectric constants are included, and at least one of the first moiety 61 and the second moiety 62 is excited by visible light radiation or infrared radiation and emits fluorescence of infrared rays. Accordingly, a movement of the particle 60 can be checked easily.

According to an example of the particle 60 of the present embodiment, the first moiety 61 and the second moiety 62 having different dielectric constants are included, and at least one of the first moiety 61 and the second moiety 62 is excited by ultraviolet radiation and emits phosphorescence of ultraviolet rays, visible light, or infrared rays. Accordingly, a movement of the particle 60 can checked easily.

According to an example of the particle 60 of the present embodiment, the first moiety 61 and the second moiety 62 having different dielectric constants are included, and at least one of the first moiety 61 and the second moiety 62 is excited by visible light radiation or infrared radiation and emits phosphorescence of infrared rays. Accordingly, a movement of the particle 60 can checked easily.

In the present embodiment, description has been given based on several embodiments. However, the present invention is not limited to the embodiments, and a variety of combinations and modifications can be made.

Explanation of Reference Symbols

| 10: | Display device |
|---|---|
| 20: | Projector |
| 21: | Coherent light source |
| 30: | Power source |
| 35: | Control device |
| 40: | Screen |
| 41: | First electrode |
| 42: | Second electrode |
| 46: | First cover layer |
| 47: | Second cover layer |
| 50: | Optical sheet |
| 51: | First base material |
| 52: | Second base material |
| 55: | Particle layer |

| 56: | Holding section |
|---|---|
| 56a: | Cavity |
| 57: | Liquid |
| 60: | Particle |
| 61: | First moiety |
| 66a: | First main section |
| 66b: | First diffuse component |
| 62: | Second moiety |
| 67a: | Second main section |
| 67b: | Second diffuse component |
| 70: | Particle manufacturing device |
| 71: | First storage section |
| 72: | Second storage section |
| 73: | Carrier storage section |
| 74: | Flow path |
| 75: | Branch section |
| 76: | Discharge section |
| 77: | Discard section |
| 78: | Hardening section |
| 80: | Particle inspection device |
| 81: | Control section |
| 82: | Microscope |
| 83: | Reflection light source |
| 84: | Transmission light source |
| 85: | Imaging section |

**Claims**

1. A particle including a first moiety and a second moiety having different dielectric constants, wherein a reflectance or a reflectance spectrum at a wavelength of invisible light, or a transmittance or a transmittance spectrum at a wavelength of invisible light is different between the first moiety and the second moiety.

2. The particle according to claim 1, wherein the wavelength of invisible light is in an ultraviolet band or an infrared band.

3. The particle according to claim 1 or 2, wherein at least one of the first moiety and the second moiety is excited by ultraviolet radiation, and emits fluorescence of ultraviolet rays, visible light, or infrared rays.

4. The particle according to claim 1 or 2, wherein at least one of the first moiety and the second moiety is excited by visible light radiation or infrared radiation, and emits fluorescence of infrared rays.

5. The particle according to claim 1 or 2, wherein at least one of the first moiety and the second moiety is excited by ultraviolet radiation, and emits phosphorescence of ultraviolet rays, visible light, or infrared rays.

6. The particle according to claim 1 or 2, wherein

at least one of the first moiety and the second moiety is excited by visible light radiation or infrared radiation, and emits phosphorescence of infrared rays.

7. The particle according to any one of claims 1 to 6, wherein
the first moiety and the second moiety each have a single color or are transparent in a visible light region.

8. An optical sheet comprising a particle layer that includes
a holding section having a predetermined thickness, and
the particle according to any one of claims 1 to 7 housed in a cavity formed on the holding section.

9. The optical sheet according to claim 8 comprising base materials that sandwich the particle layer.

10. A screen, comprising:

    the optical sheet according to claim 8 or 9; and
    an electrode that forms an electric field for driving the particle of the particle layer when a voltage is applied.

11. The screen according to claim 10 including an optical layer that absorbs or reflects an ultraviolet band.

12. A display device comprising:

    the screen according to claim 10 or 11; and
    a projector that emits coherent light to the screen.

13. The display device according to claim 12 further comprising:

    a power source that applies a voltage to the electrode of the screen; and
    a control device that controls a voltage applied to the electrode from the power source, wherein the control device controls an applied voltage from the power source to move the particle in the particle layer.

14. The display device according to claim 13, wherein the control device controls an applied voltage from the power source so as to repeatedly rotate the particle within an angular range smaller than 180°.

15. The display device according to claim 13 or 14, wherein
the control device controls at least one of a direction and a position of the particle by an applied voltage from the power source so that the first moiety covers at least part of the second moiety from an observer side along a normal line direction of the screen.

16. The particle inspection device, comprising:

    a microscope for observing the particle according to any one of claims 1 to 15;
    a light source that illuminates the particle;
    an imaging section that captures an image observed with the microscope; and
    a control section that compares an image of the particle captured by the imaging section with pass criteria determined in advance.

17. A particle manufacturing device, comprising:

    a first storage section that stores a first material that forms the first moiety of the particle;
    a second storage section that stores a second material that forms the second moiety of the particle;
    a carrier storage section that stores a liquid or gas carrier;
    a flow path connected to the first storage section, the second storage section, and the carrier storage section, and through which the first material, the second material, the particle formed by the first material and the second material, and the carrier flow;
    a hardening section that hardens the particle;
    a branch section that branches the flow path;
    a discharge section connected to a first branch branched by the branch section;
    a discard section connected to a second branch branched by the branch section; and
    the particle inspection device according to claim 16, wherein
    the control section controls the hardening section to harden the particle and then the branch section so that the particle is discharged from the discharge section when an image of the particle captured by the imaging section satisfies pass criteria determined in advance, and
    the control section controls the branch section so that the particle is discarded from the discard section when an image of the particle captured by the imaging section does not satisfy pass criteria determined in advance.

18. The particle manufacturing device according to claim 17, wherein
the control section controls at least one of a flow rate of the first material that flows out from the first storage section and a flow rate of the second material that flows out from the second storage section when an image of the particle captured by the imaging section does not satisfy pass criteria determined in advance.

19. A particle inspection method, comprising the steps of:

illuminating the particle according to any one of claims 1 to 15;

capturing an image of the particle; and

comparing the captured image of the particle with pass criteria determined in advance.

20. A particle manufacturing method, comprising the steps of:

allowing a predetermined amount of a first material that forms the first moiety and a predetermined amount of a second material that forms the second moiety to flow through a flow path;

allowing a predetermined amount of a carrier to flow through the flow path and cutting out a two-phase flow formed by a first material and a second material at a predetermined length;

executing the particle inspection method according to claim 19;

hardening, and then discharging the particle when the particle satisfies pass criteria determined in advance; and

discarding the particle without hardening when the particle does not satisfy pass criteria determined in advance.

21. The particle manufacturing method according to claim 20, wherein

when the particle does not satisfy pass criteria determined in advance, at least one of a flow rate of the first material and a flow rate of the second material is controlled.

22. A screen manufacturing method, comprising the steps of :

forming ink obtained by dispersing a particle formed by the particle manufacturing method according to claim 20 or 21 into a sheet;

manufacturing a particle layer in which a cavity is formed around the particle by immersing the sheet into liquid;

manufacturing an optical sheet by sandwiching the particle layer between base materials; and

manufacturing a screen by providing an electrode that forms an electric field in the optical sheet.

23. A screen inspection method, comprising the steps of:

reversing the particle by regularly reversing the direction of an electric field with respect to a screen manufactured by the screen manufacturing method according to claim 22;

illuminating the screen;

measuring a reflectance or a transmittance of the screen with an optical device; and

comparing the measured reflectance or transmittance of the screen with pass criteria determined in advance.

24. A particle including a first moiety and a second moiety having different dielectric constants, wherein at least one of the first moiety and the second moiety is excited by ultraviolet radiation, and emits fluorescence of ultraviolet rays, visible light, or infrared rays.

25. A particle including a first moiety and a second moiety having different dielectric constants, wherein at least one of the first moiety and the second moiety is excited by visible light radiation or infrared radiation, and emits fluorescence of an infrared ray.

26. A particle including a first moiety and a second moiety having different dielectric constants, wherein at least one of the first moiety and the second moiety is excited by ultraviolet radiation, and emits phosphorescence of ultraviolet rays, visible light, or infrared rays.

27. A particle including a first moiety and a second moiety having different dielectric constants, wherein at least one of the first moiety and the second moiety is excited by visible light radiation or infrared radiation, and emits phosphorescence of infrared rays.

FIG.1

FIG.2

FIG.3

40

40a

FIG.4

FIG.5

EP 3 361 312 A1

FIG.6

FIG.7

```
                        ┌──────────────┐
                        │    Start     │
                        └──────┬───────┘
                               │         ST1
              ┌────────────────▼────────────────┐
              │   Allow first material 61a and  │
              │   second material 62a to flow   │
              │      through flow path 74       │
              └────────────────┬────────────────┘
                               │         ST2
                    ┌──────────▼──────────┐
                    │  Allow carrier 63a  │
                    │   to flow through   │
                    │    flow path 74     │
                    └──────────┬──────────┘
                               │         ST3
                   ┌┬──────────▼──────────┬┐
                   ││      Inspect        ││
                   ││    particle 60      ││
                   └┴──────────┬──────────┴┘
                               │         ST4
                          ┌────▼────┐
                          │ Has particle 60 │    N
                      <   │    passed?      >──────────────┐
                          └────┬────┘                      │
                               │ Y                         │
                               │         ST5               │         ST7
              ┌────────────────▼──────────┐   ┌────────────▼──────────┐
              │     Turn on hardening     │   │     Instruct each     │
              │        section 86         │   │  section to perform   │
              └────────────────┬──────────┘   │      correction       │
                               │         ST6   └────────────┬──────────┘
              ┌────────────────▼──────────┐                 │         ST8
              │  Control three-way valve  │   ┌────────────▼──────────┐
              │  75 to be in direction of │   │   Turn off hardening  │
              │    discharge section 76   │   │       section 86      │
              └────────────────┬──────────┘   └────────────┬──────────┘
                               │                           │         ST9
                               │              ┌────────────▼──────────┐
                               │              │  Control three-way valve │
                               │              │  75 to be in direction of │
                               │              │    discard section 77    │
                               │              └────────────┬──────────┘
                               │◄──────────────────────────┘
                        ┌──────▼───────┐
                        │     End      │
                        └──────────────┘
```

FIG.8

```
        ┌────────────────┐
        │    Inspect     │
        │  particle 60   │
        └────────┬───────┘
                 │
                 ▼         ST3-1
        ┌────────────────┐
        │  Turn on light │
        │  sources 83, 84│
        └────────┬───────┘
                 │
                 ▼         ST3-2
        ┌────────────────┐
        │ Acquire image of│
        │ particle 60 from│
        │  microscope 82 │
        └────────┬───────┘
                 │
                 ▼         ST3-3
        ┌────────────────┐
        │Imaging section 85│
        │ captures image of│
        │   particle 60  │
        └────────┬───────┘
                 │
                 ▼         ST3-4
        ┌────────────────┐
        │ Compare image of│
        │ particle 60 with│
        │  pass criteria │
        └────────┬───────┘
                 │
                 ▼
          ⟨   Return   ⟩
```

FIG.9

```
                    ┌─────────────┐
                    │    Start    │
                    └─────────────┘
                           │
                           ▼              ST11
   ┌──────────────────────────────────────────┐
   │  Form ink in which particle 60 is         │
   │        dispersed into sheet to            │
   │    manufacture holding section 56         │
   └──────────────────────────────────────────┘
                           │
                           ▼              ST12
   ┌──────────────────────────────────────────┐
   │  Immerse holding section 56 into          │
   │  solvent 57 for a certain period          │
   │  of time to form cavity 56a and           │
   │    manufacture particle layer 55          │
   └──────────────────────────────────────────┘
                           │
                           ▼              ST13
   ┌──────────────────────────────────────────┐
   │   Cover particle layer 55 with            │
   │    base materials 51 and 52 to            │
   │  manufacture particle sheet 50            │
   └──────────────────────────────────────────┘
                           │
                           ▼              ST14
   ┌──────────────────────────────────────────┐
   │   Provide electrodes 41 and 42            │
   │      in particle sheet 50 to              │
   │      manufacture screen 40                │
   └──────────────────────────────────────────┘
                           │
                           ▼              ST15
         ┌─┬──────────────────────────┬─┐
         │ │        Inspect           │ │
         │ │       Screen 40          │ │
         └─┴──────────────────────────┴─┘
                           │
                           ▼              ST16
                     ╱───────────╲            N
                    ╱  Has screen  ╲───────────────────┐
                    ╲  40 passed?  ╱                    │
                     ╲───────────╱                      │
                           │ Y                          │
                           ▼          ST17              ▼          ST18
   ┌──────────────────────────────┐       ┌──────────────────────┐
   │     Combine diffusion        │       │     Repair or         │
   │   member and the like        │       │     discard           │
   │     with screen 40           │       │                       │
   └──────────────────────────────┘       └──────────────────────┘
                           │                           │
                           ▼◄──────────────────────────┘
                    ┌─────────────┐
                    │     End     │
                    └─────────────┘
```

FIG.10

```
                        ┌───────────────────┐
                        │      Inspect      │
                        │     screen 40     │
                        └───────────────────┘
                                  │
                                  ▼              ST15-1
        ┌──────────────────────────────────────┐
        │        Reverse particle 60 by        │
        │   regularly reversing direction      │
        │          of electric field           │
        └──────────────────────────────────────┘
                                  │
                                  ▼          ST15-2
                        ┌───────────────────┐
                        │     Illuminate     │
                        │     screen 40     │
                        └───────────────────┘
                                  │
                                  ▼          ST15-3
                  ┌─────────────────────────────┐
                  │   Measure reflectance or    │
                  │   transmittance of screen   │
                  │   40 with optical device    │
                  └─────────────────────────────┘
                                  │
                                  ▼                ST15-4
        ┌──────────────────────────────────────────┐
        │   Compare measured reflectance or        │
        │  transmittance of screen 40 with pass    │
        │    criteria determined in advance        │
        └──────────────────────────────────────────┘
                                  │
                                  ▼
                          ╭───────────────╮
                          │    Return     │
                          ╰───────────────╯
```

FIG.11

Time

Voltage[V]

X

0

-Y

EP 3 361 312 A1

FIG.12

EP 3 361 312 A1

FIG.13

40,50,55

La

56

Lb

66a

Lb

ra

67b

67a

Lb

56a

61

60

62

57

A

nd

nd

FIG.14

EP 3 361 312 A1

FIG.15

FIG.16

FIG.17

FIG.18

EP 3 361 312 A1

FIG.19

FIG.20

FIG.21

E

271

20

271a

271a₂

271a₁

271b

FIG.22

53,58          55

FIG.23

(a)

(b)

## INTERNATIONAL SEARCH REPORT

| | International application No. |
|---|---|
| | PCT/JP2016/079901 |

**A. CLASSIFICATION OF SUBJECT MATTER**

*G03B21/60*(2014.01)i, *G02B26/10*(2006.01)i, *G02B27/48*(2006.01)i, *G03B21/00* (2006.01)i, *G03B21/62*(2014.01)i

According to International Patent Classification (IPC) or to both national classification and IPC

**B. FIELDS SEARCHED**

Minimum documentation searched (classification system followed by classification symbols)
G03B21/60, G02B26/10, G02B27/48, G03B21/00, G03B21/62, G02F1/167

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-162910 A (Alps Electric Co., Ltd.), 22 June 2006 (22.06.2006), paragraphs [0043] to [0046]; fig. 5 & US 2006/0119915 A1 paragraphs [0053] to [0056]; fig. 5 & KR 10-2006-0063746 A & CN 1786795 A | 1–9 |
| Y | JP 2008-537599 A (BAE Systems Land & Armaments L.P.), 18 September 2008 (18.09.2008), paragraph [0056]; fig. 8 & WO 2007/094778 A2 page 23, line 25 to page 24, line 10; fig. 8 & EP 1888328 A2 & KR 10-2007-0106787 A | 1–2 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 December 2016 (19.12.16) | 27 December 2016 (27.12.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/079901

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-145598 A (Soken Chemical & Engineering Co., Ltd.), 01 July 2010 (01.07.2010), paragraph [0104] & WO 2010/071002 A1 & CN 102246094 A & KR 10-2011-0104470 A | 1-9 |
| Y | JP 2003-84317 A (Fujitsu Ltd.), 19 March 2003 (19.03.2003), paragraphs [0085], [0091]; fig. 2 & US 2003/0007239 A1 paragraphs [0110], [0118]; fig. 2 | 1-9 |
| Y | JP 2012-185497 A (Ushio Inc., Sogo Keibi Hosho Co., Ltd., Nagoya University), 27 September 2012 (27.09.2012), paragraphs [0018] to [0019] (Family: none) | 4,6 |
| Y | JP 2006-3924 A (Kenji SATO), 05 January 2006 (05.01.2006), paragraph [0048] (Family: none) | 7 |
| X | JP 7-113738 A (Hitachi, Ltd.), 02 May 1995 (02.05.1995), paragraphs [0013] to [0015]; fig. 1 & US 5715182 A column 5, line 29 to column 6, line 4; fig. 1 & EP 644414 A2 | 16,19 |
| A | WO 2011/070777 A1 (Mitsubishi Electric Corp.), 16 June 2011 (16.06.2011), entire text; all drawings & US 2012/0224109 A1 & CN 102652272 A | 10-15 |
| A | JP 2011-95659 A (Soken Chemical & Engineering Co., Ltd.), 12 May 2011 (12.05.2011), entire text; all drawings (Family: none) | 16-21 |
| A | WO 2004/077141 A1 (Fujitsu Ltd.), 10 September 2004 (10.09.2004), entire text; all drawings & US 2005/0180035 A1 | 1-22 |
| A | JP 2002-504236 A (Xerox Corp.), 05 February 2002 (05.02.2002), entire text; all drawings & US 5739801 A & WO 1997/033267 A2 & EP 868714 A2 & CN 1207193 A | 1-22 |

Form PCT/ISA/210 (continuation of second sheet) (January 2015)

**INTERNATIONAL SEARCH REPORT**

| International application No. |
|---|
| PCT/JP2016/079901 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-500172 A  (E-Ink Corp.),<br>09 January 2001 (09.01.2001),<br>entire text; all drawings<br>& US 6120588 A          & WO 1998/003896 A1<br>& EP 912913 A1 | 1-22 |

Form PCT/ISA/210 (continuation of second sheet) (January 2015)

## INTERNATIONAL SEARCH REPORT

| International application No. |
|---|
| PCT/JP2016/079901 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☒ As only some of the required additional search fees were timely paid by the applicant, this international search report covers only those claims for which fees were paid, specifically claims Nos.:
1-22

4. ☐ No required additional search fees were timely paid by the applicant.    Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

<table>
<tr><td>**INTERNATIONAL SEARCH REPORT**</td><td>International application No.<br>PCT/JP2016/079901</td></tr>
</table>

Continuation of Box No.III of continuation of first sheet(2)

Document 3: JP 2010-145598 A (Soken Chemical & Engineering Co., Ltd.), 01 July 2010 (01.07.2010), paragraph [0104] & WO 2010/071002 A1 & CN 102246094 A & KR 10-2011-0104470 A

Document 4: JP 2003-84317 A (Fujitsu Ltd.), 19 March 2003 (19.03.2003), paragraphs [0085], [0091]; fig. 2 & US 2003/0007239 A1 paragraphs [0110], [0118]; fig. 2

Claims are respectively classified into the following seven inventions.

(Invention 1) claims 1-15

Claims 1 to 15 have a special technical feature, namely "a particle which includes a first part and a second part having different relative dielectric constants, wherein the first part and the second part have different reflectances or reflectance spectra at wavelengths of non-visible light, or different transmittances or transmittance spectra at wavelengths of non-visible light", and are therefore classified into Invention 1.

(Invention 2) claims 16-22

Claim 16 is an invention of a particle inspecting device provided with "a microscope for observing the particle as claimed in any one of claims 1 to 15" and "a light source which illuminates the particle".

However, the description "a microscope for observing the particle as claimed in any one of claims 1 to 15" and the description "a light source which illuminates the particle" are merely descriptions of applications of a microscope and a light source respectively.

Consequently, on the basis of this description, "a microscope for observing the particle as claimed in any one of claims 1 to 15" and the particle inspecting device as claimed in claim 16 cannot be said to have the same or a corresponding special technical feature.

Further, claim 16 is dependent on claims 1 to 15 classified into Invention 1, but the technical features added to claim 1, namely "provided with a microscope for observing a particle, a light source which illuminates the particle, an image capturing unit which captures an image being observed using the microscope, and a control unit which compares the particle image captured by the image capturing unit with a pre-determined acceptance standard" has a low degree of technical relationship with the technical feature of claims 1 to 15, namely "a particle which includes a first part and a second part having different relative dielectric constants, wherein the first part and the second part have different reflectances or reflectance spectra at wavelengths of non-visible light, or different transmittances or transmittance spectra at wavelengths of non-visible light".

Therefore, it is not considered that claim 16 has an inventive relationship with claims 1-15.

In addition, claim 16 has no relationship such that said claim 16 is substantially same as or equivalent to any claim classified into Invention 1.

Consequently, claim 16 cannot be classified into Invention 1.

Then claim 16 has a special technical feature, namely "a microscope for observing a particle, a light source which illuminates the particle, an image capturing unit which captures an image being observed using the microscope, and a control unit which compares the particle image captured by the image capturing unit with a pre-determined acceptance standard", and is therefore classified into Invention 2.

(Continued to next extra sheet)

Form PCT/ISA/210 (extra sheet) (January 2015)

**INTERNATIONAL SEARCH REPORT**

International application No.

PCT/JP2016/079901

Claims 17-18 are classified into Invention 2, since these claims have a technical feature same as claim 16.

Claims 19 to 22 have a technical feature corresponding to the special technical feature in claim 16, namely "a particle inspecting method which includes a step of illuminating a particle, a step of capturing an image of the particle, and a step of comparing the captured particle image with a pre-determined acceptance standard", and are therefore classified into Invention 2.

(Invention 3) claim 23

Claim 23 is an invention of a screen inspecting method provided with "a step of inverting the particles by regularly inverting the electric field orientation with respect to a screen manufactured using the screen manufacturing method as claimed in claim 22".

However, the description "with respect to a screen manufactured using the screen manufacturing method as claimed in claim 22" merely describes the object to which the step "inverting the particles by regularly inverting the electric field orientation" is applied.

Consequently, on the basis of this description, the "screen manufacturing method as claimed in claim 22" and the screen inspecting method as claimed in claim 23 cannot be said to have the same or a corresponding special technical feature.

Further, claim 23 is dependent on claim 22 classified into Invention 2, but the technical feature added to claim 22, namely "includes: a step of inverting the particles by regularly inverting the electric field orientation with respect to a screen; a step of illuminating the screen; a step of measuring the reflectance or the transmittance of the screen using an optical device; and a step of comparing the measured reflectance or transmittance of the screen with a pre-determined acceptance standard" has a low degree of technical relationship with the technical feature of claim 22, namely "includes: a step of forming a sheet from ink in which particles have been dispersed; a step of immersing the sheet in a liquid to manufacture a particle layer in which cavities have been formed around the particles; a step of sandwiching the particle layer in a substrate to manufacture an optical sheet; and a step of manufacturing a screen by providing the optical sheet with electrodes which form an electric field".

Therefore, it is not considered that claim 23 has an inventive relationship with claim 22.

In addition, claim 23 has no relationship such that said claim 23 is substantially same as or equivalent to any claim classified into Inventions 1-2.

Consequently, claim 23 cannot be classified into Inventions 1-2.

Then claim 23 has a special technical feature, namely "includes: a step of forming a sheet from ink in which particles have been dispersed; a step of immersing the sheet in a liquid to manufacture a particle layer in which cavities have been formed around the particles; a step of sandwiching the particle layer in a substrate to manufacture an optical sheet; and a step of manufacturing a screen by providing the optical sheet with electrodes which form an electric field", and is therefore classified into Invention 3.

(Invention 4) claim 24

Claim 24 has a technical feature common with claim 1 categorized into Invention 1, namely "a particle which includes a first part and a second part having different relative dielectric constants".

(Continued to next extra sheet)

# EP 3 361 312 A1

| **INTERNATIONAL SEARCH REPORT** | International application No. |
|---|---|
| | PCT/JP2016/079901 |

However, the above-said technical feature cannot be considered to be a special technical feature, since the technical feature does not make a contribution over the prior art in the light of the contents disclosed in the document 3 (particularly, see paragraph [0104]) and the contents disclosed in the document 4 (particularly, see paragraphs [0085], [0091] and fig. 2).

Further, there is no other same or corresponding special technical feature between claim 24 and claim 1.

Further, claim 24 is not dependent on claims 1-23.

In addition, claim 24 has no relationship such that said claim 24 is substantially same as or equivalent to any claim classified into Inventions 1-3.

Consequently, claim 24 cannot be classified into Inventions 1-3.

Then claim 24 has a special technical feature, namely "a particle which includes a first part and a second part having different relative dielectric constants, wherein the first part and/or the second part is excited by ultraviolet light and emits fluorescence as ultraviolet light, visible light or infrared light", and is therefore classified into Invention 4.

(Invention 5) claim 25

Claim 25 has a technical feature common with claim 1 classified into Invention 1 and claim 24 classified into Invention 4, namely "a particle which includes a first part and a second part having different relative dielectric constants".

However, the above-said technical feature cannot be considered to be a special technical feature, since the technical feature does not make a contribution over the prior art in the light of the contents disclosed in the document 3 (particularly, see paragraph [0104]) and the contents disclosed in the document 4 (particularly, see paragraphs [0085], [0091] and fig. 2).

Further, there is no other same or corresponding special technical feature between claim 25 and claims 1, 24.

Further, claim 25 is not dependent on claims 1-24.

In addition, claim 25 has no relationship such that said claim 25 is substantially same as or equivalent to any claim classified into Inventions 1-4.

Consequently, claim 25 cannot be classified into Inventions 1-4.

Then claim 25 has a special technical feature, namely "a particle which includes a first part and a second part having different relative dielectric constants, wherein the first part and/or the second part is excited by visible light or infrared light and emits fluorescence as infrared light", and is therefore classified into Invention 5.

(Invention 6) claim 26

Claim 26 has a technical feature common with claim 1 classified into Invention 1, claim 24 classified into Invention 4, and claim 25 classified into Invention 5, namely "a particle which includes a first part and a second part having different relative dielectric constants".

However, the above-said technical feature cannot be considered to be a special technical feature, since the technical feature does not make a contribution over the prior art in the light of the contents disclosed in the document 3 (particularly, see paragraph [0104]) and the contents disclosed in the document 4 (particularly, see paragraphs [0085], [0091] and fig. 2).

Further, there is no other same or corresponding special technical feature between claim 26 and claims 1, 24-25.

(Continued to next extra sheet)

Form PCT/ISA/210 (extra sheet) (January 2015)

**INTERNATIONAL SEARCH REPORT**

International application No.

PCT/JP2016/079901

Further, claim 26 is not dependent on claims 1-25.

In addition, claim 26 has no relationship such that said claim 26 is substantially same as or equivalent to any claim classified into Inventions 1-5.

Consequently, claim 26 cannot be classified into Inventions 1-5.

Then claim 26 has a special technical feature, namely "a particle which includes a first part and a second part having different relative dielectric constants, wherein the first part and/or the second part is excited by ultraviolet light and emits phosphorescence as ultraviolet light, visible light or infrared light", and is therefore classified into Invention 6.

(Invention 7) claim 27

Claim 27 has a technical feature common with claim 1 classified into Invention 1, claim 24 classified into Invention 4, claim 25 classified into Invention 5 and claim 26 classified into Invention 6, namely "a particle which includes a first part and a second part having different relative dielectric constants".

However, the above-said technical feature cannot be considered to be a special technical feature, since the technical feature does not make a contribution over the prior art in the light of the contents disclosed in the document 3 (particularly, see paragraph [0104]) and the contents disclosed in the document 4 (particularly, see paragraphs [0085], [0091] and fig. 2).

Further, there is no other same or corresponding special technical feature between claim 27 and claims 1, 24-26.

Further, claim 27 is not dependent on claims 1-26.

In addition, claim 27 has no relationship such that said claim 27 is substantially same as or equivalent to any claim classified into Inventions 1-6.

Consequently, claim 27 cannot be classified into Inventions 1-6.

Then claim 27 has a special technical feature, namely "a particle which includes a first part and a second part having different relative dielectric constants, wherein the first part and/or the second part is excited by visible light or infrared light and emits phosphorescence as infrared light", and is therefore classified into Invention 7.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012033174 A
- JP 2008310260 A
- JP 2009116326 A
- JP 5326124 B
- JP 2006003924 A
- JP 5353509 B
- JP 5392746 B
- JP 2011112792 A
- WO 2012033174 A